(19)

Europäisches
Patentamt
European
Patent Office
Office européen
des brevets

(11) **EP 1 724 686 B1**

(12) **EUROPEAN PATENT SPECIFICATION**

(45) Date of publication and mention
of the grant of the patent:
**07.04.2010 Bulletin 2010/14**

(51) Int Cl.:
***G06F 11/10*** *(2006.01)*

(21) Application number: **05104238.0**

(22) Date of filing: **19.05.2005**

(54) **ECC for single 4-bits symbol correction of 32 symbols words based on a matrix having a maximum row weight matrix of 22**

Fehlerkorrigierender Kode (ECC) für einzelne 4-bit Symbol Korrektur von Wörtern mit 32 Symbolen basierend auf einer Matrix mit einem maximalen Höchstzeilengewicht von 22

Code de correction des erreurs (CCE) pour corriger un seul symbole de 4 bits dans des mots de 32 symboles reposant sur une matrice ayant un poid de ligne maximal de 22

(84) Designated Contracting States:
**DE FR GB IT**

(43) Date of publication of application:
**22.11.2006 Bulletin 2006/47**

(73) Proprietor: **STMicroelectronics Srl**
**20041 Agrate Brianza (MB) (IT)**

(72) Inventors:
• **Griseta, Antonio**
**I-70042 Mola di Bari (BA) (IT)**
• **Mazzone, Angelo**
**I-70037 Ruvo di Puglia (BA) (IT)**

(74) Representative: **Pezzoli, Ennio et al**
**c/o Maccalli & Pezzoli S.r.l.**
**Via Settembrini 40**
**20124 Milano (IT)**

(56) References cited:
**US-A- 5 056 089        US-A- 5 537 427**
**US-A1- 2004 054 959**

• **LIN, COSTELLO: "Error Control Coding" 2004, PEARSON PRENTICE HALL , USA , XP002338321**
**\* page 920 - page 921 \***

**Description**

The present invention relates to the Error Correction Code (ECC) field.

ECC technologies are commonly used in a number of applications, such as in magnetic discs, magnetic tapes, optical discs and semiconductor memories. Any ECC is aimed at detecting and possibly correcting errors in data of interest.

Considering in particular the memories, when an ECC is used, redundancy bits (also called check bits) are added to the bits of each data word, creating a code word that will be stored in the memory. For each element in the set of all possible configurations of data bits, one and only one possible configuration of redundancy bits exists. This is accomplished by means of a corresponding parity matrix that entirely defines the ECC itself. When a read operation occurs, the system recalculates the redundancy bits from the read data bits and compares the new redundancy bits with the ones read from the memory; any difference is indicative of errors in the read data bits, and can be used to correct them in some cases.

Using more or less redundancy bits makes the difference between detection and correction capability. For example, using only a single redundancy bit allows detecting a single bit error only, performing the so called "parity check".

Another classical example is the Hamming code: given k data bits, (n-k) redundancy bits are needed to obtain a code with n-bit code words able to correct a single-bit error, under the condition that $2^{(n-k)} \geq n+1$. For example, this single bit error capability satisfies the reliability needs of bit-oriented, bit-interleaved memories.

However, there are applications wherein tolerance for multiple errors is needed. Typical examples are multilevel flash memories that store more bits in the same cell; in this case, when the cell fails due to an alpha particle, it is possible that more bits must be corrected; other examples are bit-oriented bit-interleaved memories, wherein it would be desirable to correct "hard" multi-bit errors to increase production yield.

This higher error correction capability of the ECC translates into an increased complexity of the parity matrix (and then of its circuital implementation). Unfortunately, no algorithm is available for design the parity matrix automatically so as to fit specific requirements. On the contrary, the operation must be performed manually with an iterative process that attempts to optimize the parity matrix for the desired goal. However, this process is very difficult, since any update to the parity matrix (in order to approach the goal locally) can have unexpected side-effects that adversely affect the characteristics of the parity matrix on the whole. Therefore, the process of designing the parity matrix is very time consuming, and often does not allow obtaining a parity matrix that actually fits the desired requirements.

Some attempts to design parity matrixes optimized for specific applications are known in the art. For example, US patent No.6,219,817 illustrates an error correcting and detecting circuit applicable to solve the problem of detecting a wire fault on a bus with time-multiplexed data. Such error correcting and detecting circuit makes use of a code defined by a parity matrix whose Maximum Row Weight (defined by the maximum number of "1"s on every row) is equal to 27.

Further examples of parity matrixes are provided in the patent US 5,537,427, which discloses a method for encoding and decoding signals in accordance with a class of modular coding schemes.

The present invention proposes a specific parity matrix for an error correction code.

Particularly, an aspect of the present invention provides an error correction device. The error correction device includes means (such as an EXOR tree circuit) for generating a check word of 16 bits from an (input and/or output) data word of 128 bits according to a parity matrix of 16x144 bits; the check word is capable of providing information about a correctness of the data word. Said parity matrix consists of any permutation of 144 vectors of 16 bits as defined in claim 1.

The proposed parity matrix has been specifically optimized for providing a low Maximum Row Weight (that is, 22).

In this way, the circuital implementation of the parity matrix is simple and effective.

Particularly, the process of generating the check word is accomplished without using logic gates that imply too elevated delays.

Without detracting from its general applicability, the proposed solution is particularly advantageous in multilevel flash memories.

Typically, the error correction device uses the same parity matrix both for an input operation and for an output operation.

Preferably, each data word, check word and code word is formed by symbols in GF($2^4$) of 4 bits; the parity matrix consists of 4x36 symbols defined by any permutation of 36 vectors of 4 symbols as defined in claim 3.

This choice ensures that any single symbol error can always be corrected. Moreover, it allows obtaining a simple circuital implementation.

Advantageously, each code word has the symbols (of the included check word in positions within the code word corresponding to the vectors of the parity matrix) composed by three all-zeros matrices and one identity matrix.

In this way, the code is in a *systematic form.*

Preferably, the parity matrix is the one defined in claim 5.

The proposed matrix optimizes the distribution of the "1"s, so as to balance the propagation delay.

In a specific embodiment of the invention, a single combinatorial network is used for both the input operations and the output operations.

This implementation allows avoiding an excessive waste of silicon area for integrating the error correction device (even if it introduces a delay caused by the element required to select the data to be passed to the combinatorial network).

According to another embodiment of the invention, two distinct combinatorial networks are provided.

This implementation avoids providing a further element in a critical zone of the data-pathway (at the cost of an increased area occupation).

Another aspect of the present invention provides a memory device including the error correction device.

Preferably, the memory device is a multi-level non-volatile memory device, wherein each memory cell stores a symbol.

In this way, it is possible to correct all the bits stored in every memory cell that result wrong because of errors due to an alpha particle.

Another aspect of the present invention provides a corresponding error correction method.

The characterizing features of the present invention are set forth in the appended claims. The invention itself, however, as well as further features and advantages thereof will be best understood by reference to the following detailed description, given purely by way of a non-restrictive indication, to be read in conjunction with the accompanying drawings.

Figure 1 is a block diagram of a memory device in which the solution according to an embodiment of the invention can be used;

Figure 2 illustrates a companion matrix of a primitive polynomial $x^4+x+1$ in $GF(2^4)$ with all its powers;

Figure 3a illustrates a parity matrix according to an embodiment of the invention represented in $GF(2^4)$;

Figure 3b illustrates the same parity matrix represented in $GF(2)$;

Figure 4a is a block diagram showing the structure of an ECC block according to a first embodiment of the present invention;

Figure 4b is a block diagram showing the structure of the ECC block according to a second embodiment of the present invention;

Figure 5 illustrates the structure of a corrector block included in the ECC block according to an embodiment of the invention; and

Figure 6 illustrates an exemplary electrical schematic diagram of a circuit that computes the value of an error location signal within the ECC block.

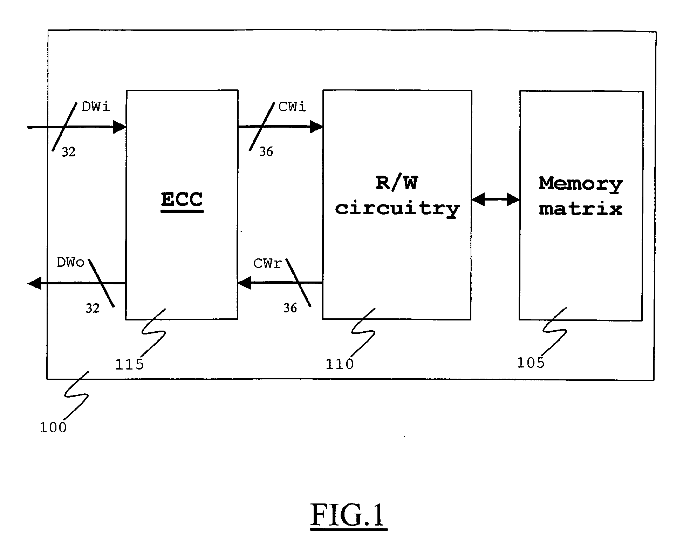

Particularly, Figure 1 is a simplified and generic functional block diagram of a memory device 100 (for example, a multilevel flash memory). It is to be underlined that only few functional blocks involved in reading and/or writing operations are shown (leaving out any other block being not relevant to the scope of the present invention). Moreover, for the sake of simplicity, signals and corresponding physical lines carrying them are denoted with the same references. Particularly, each signal reference used in this and in the following drawings relates to a bus of lines, whose dimension is denoted in the drawings with a number associated to the corresponding reference. It has to be noted that the aforementioned numbers denoting the dimensions of the bus lines refer (unless otherwise indicated) to the number of symbols (each one consisting of 4 bits) that the corresponding bus lines can convey.

The memory device 100 includes a memory matrix 105, a read/write circuitry 110, and an ECC block 115.

The memory matrix 105 is formed by a plurality of memory cells (not shown in the Figure). Each memory cell can be programmed to multiple levels, so as to store a logic value consisting of 4 bits of information (i.e., one symbol).

The memory matrix 105 is connected to the read/write circuitry 110, which is used for selecting, reading, and writing the memory cells thereof.

The ECC block 115 receives a 32-symbol data word $DWi_{1x32}$ from the outside, and generates a corresponding 36-symbol code word $CWi_{1x36}$ that is provided to the read/write circuitry 110. Moreover, the ECC block 115 receives a 36-symbol code word $CWr_{1x36}$ from the read/write circuitry 110 and generates a corresponding 32-symbol data word $DWo_{1x32}$ that is provided to the outside. The data word $DWi_{1x32}$ represents a word of data that is to be stored in the memory matrix 105; the ECC block 115 codifies the data word $DWi_{1x32}$, generating a check word $KWi_{1x4}$ of 4 "redundant" symbols, and adds it to the data word $DWi_{1x32}$, thus obtaining the code word $CWi_{1x36}$. Said code word $CWi_{1x36}$ is stored into the memory matrix 105 by means of the read/write circuitry 110. On the other hand, the code word $CWr_{1x36}$ is read from the memory matrix 105 by means of the read/write circuitry 110. The code word $CWr_{1x36}$ is processed by the ECC block 115, which removes a check word $KWr_{1x4}$ of 4 redundant symbols, thereby obtaining a 32-symbol data word $DWr_{1x32}$; the ECC block 115 then verifies the correctness of the data word $DWr_{1x32}$ (possibly correcting a wrong symbol), and sends the corresponding corrected data word $DWo_{1x32}$ to the outside.

The codification/decodification implemented by the ECC block 115 makes use of a code that is of the Single Symbol error Correcting (SSC) type. In order to explain this code, reference will be made to generic data words, check words and code words that are denoted omitting any index for the sake of simplicity. Single symbol error correcting codes are non-binary codes defined over a finite field GF(p) (Galois Field), whose code words are constituted by symbols that can take p different values. For instance, GF(2) represents the well known binary field. According to the present invention, the proposed code refers to 4-bit symbols, thus $p=2^4$, so that the code is defined over $GF(2^4)$. Moreover, the code is a (36,32) code. This means that each code word $CW_{1x36}$ consists of 36 code symbols $c_i$ (144 bits): 32 data symbols $d_j$ (128 bits) representing the data word ($DW_{1x32}$), plus 4 check symbols $k_1$ (16 bits) representing the check word ($KW_{1x4}$). This code corrects all possible errors occurring within the same 4-bit symbol, one symbol per data word; moreover, it can also detect (but not correct) errors in two symbols.

The code is defined by a parity matrix $H_{4x36}$ having 4 rows and 36 columns in GF ($2^4$). Said parity matrix $H_{4x36}$ is composed by columns that are all non-zero vectors of symbols in $GF(2^4)$; the columns satisfy the so-called *exclusion property* on $GF(2^4)$, i.e., the columns are mutually linearly independent. This property guarantees that the code is of the single symbol correcting type.

In $GF(2^4)$, a necessary and sufficient condition for a vector $CW_{1x36}$ of 36 symbols to be a (correct) code word is to verify the equation:

$$(1) \qquad\qquad H_{4x36} CW^T{}_{36x1} = 0_{4x1}$$

The parity matrix $H_{4x36}$ is such that its right last four columns form an identity matrix $I_{4x4}$:

$$(2) \qquad\qquad H_{4x36} = \left\langle H'_{4x32} \,\middle|\, I_{4x4} \right\rangle,$$

(wherein $H'_{4x32}$ is the parity matrix $H_{4x36}$ without the identity matrix $I_{4x4}$) .

Moreover, the code is in a *systematic form,* i.e., the code word $CW_{1x36}$ is structured with "non-scrambled" data symbols $d_i$ and check symbols $k_1$ (with the check symbols $k_1$ in the positions corresponding to the identity matrix in the parity matrix):

$$(3) \qquad CW_{1x36} = \left\langle DW_{1x32} \,\middle|\, KW_{1x4} \right\rangle = \left\langle d_{31}, d_{30}, ..., d_1, d_0, k_3, k_2, k_1, k_0 \right\rangle$$

Thanks to the particular structure of the parity matrix $H_{4x36}$, using the systematic form of the code means that each check symbol $k_1$ only depends on data symbols $d_i$ and does not depend on other check symbols. Consequently, the check word $KW_{1x4}$ is a function of the data word $DW_{1x32}$ only, with said function expressed by the matrix $H'_{4x32}$ by the following formula:

$$(4) \qquad\qquad KWi_{1x4} = DWi_{1x32} H'^T_{32x4},$$

In other words, each check symbol $k_1$ is obtained by sums of products between data symbols $d_i$ and symbols belonging to rows of the matrix $H'_{4x32}$ (i.e., columns of the matrix $H'^T_{4x32}$). Therefore, the codification of the data word $DWi_{1x32}$ in the code word $CWi_{1x36}$ is obtained by adding (to the data word $DWi_{1x32}$) the check word $KWi_{1x4}$.

Let us suppose now that (instead of being equal to the correct code word $CWi_{1x36}$) the received code word $CWr_{1x36}$ is wrong, that is, $CWr_{1x36} = CWi_{1x36} + E_{1x36}$, wherein an error is represented by a 36-symbol error word $E_{1x36}$ (here and in the following, the symbol "+" denotes the module-2 sum).

More particularly, in the case of a single symbol error, said error word $E_{1x36}$ is an all-zero-symbol vector that includes a single error symbol "e" in correspondence of the wrong symbol. It is possible to obtain information on the wrong symbol location within the code word $CWi_{1x36}$ by means of a 4-symbol syndrome vector $S_{1x4}$, given by:

$$(5) \qquad\qquad S^T_{4x1} = H_{4x36} CWr^T_{36x1}$$

In fact, the syndrome vector $S_{1x4}$ is related to the error word $E_{1x36}$ by the following expression:

$$(6) \qquad S_{4x1}^{T} = H_{4x36} CWr_{36x1}^{T} = H_{4x36} CWi_{36x1}^{T} + H_{4x36} E_{36x1}^{T} = H_{4x36} E_{36x1}^{T} .$$

According to the particular structure of the parity matrix $H_{4x36}$, and thanks to the systematic form of the code, the calculation of the syndrome vector $S_{1x4}$ of the received code word $CWr_{1x36}$ can be definitely simplified:

$$(7) \qquad S_{1x4} = KWr_{1x4} + KWc_{1x4} ,$$

where $KWr_{1x4}$ is the check word of the received code word $CWr_{1x36}$, and $KWc_{1x4}$ is a recalculated check word given by:

$$(8) \qquad KWc_{1x4} = DWr_{1x32} H_{32x4}^{\prime T} .$$

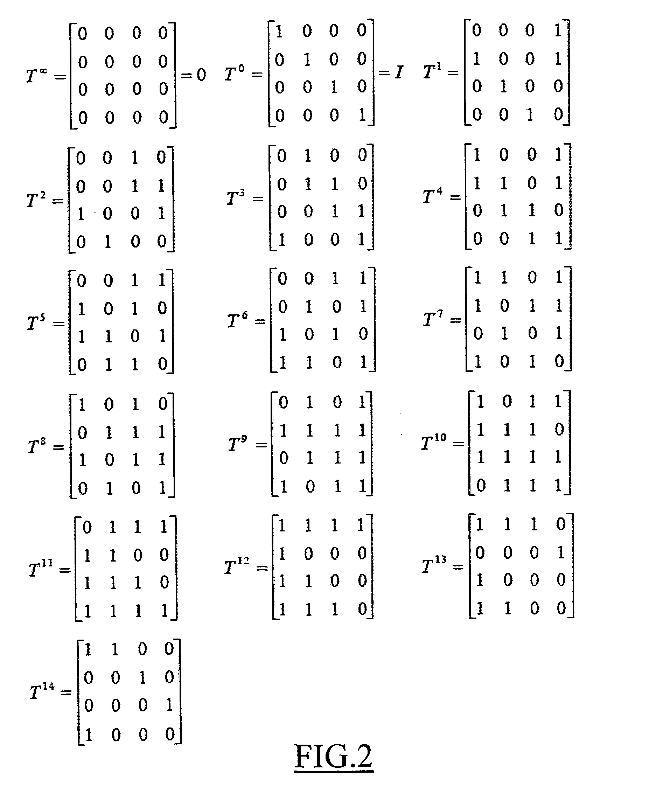

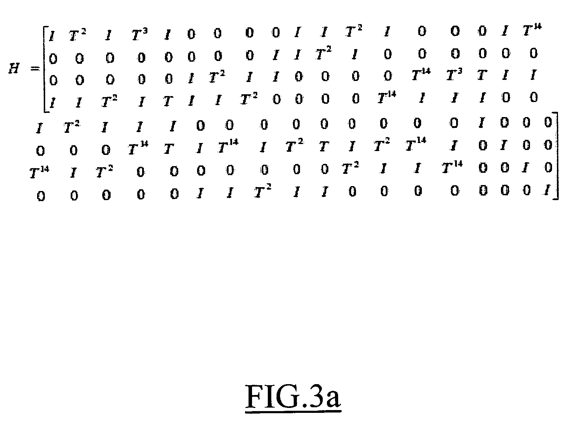

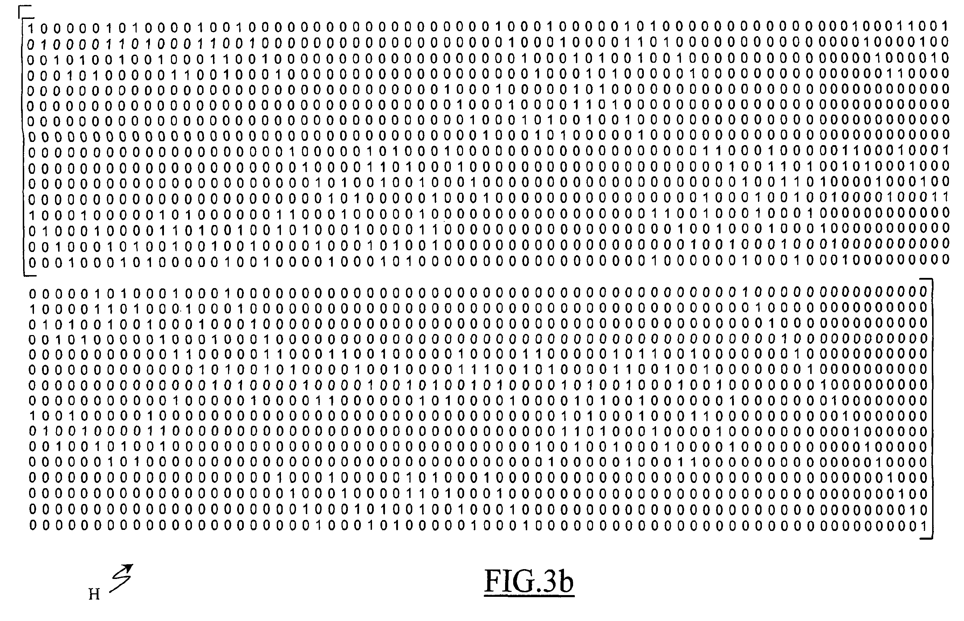

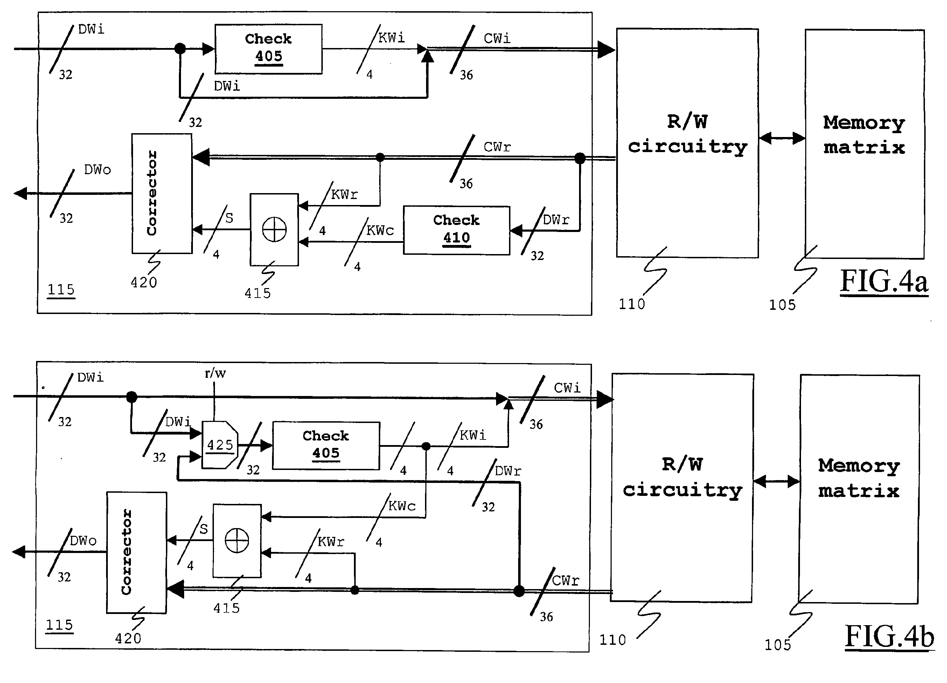

If the syndrome vector $S_{1x4}$ results as an all-zeros vector, i.e., the two check words $KWr_{1x4}$ and $KWc_{1x4}$ are equal, no single symbol error has occurred (that is, no symbol error or more than one symbol error has occurred).
If a single symbol error has occurred, the syndrome vector $S_{1x4}$ is proportional to the column of the parity matrix $H_{4x36}$ corresponding to the location of the error; for example, if an error occurs in the j-th symbol of the received code word $CWr_{1x36}$, the syndrome vector $S_{1x4}$ is equal to the j-th column vector of the parity matrix $H_{4x36}$ scaled by the "e" symbol.
Once recognized that a single symbol error has occurred in the received code word $CWr_{1x36}$, it is possible to correct it using the corresponding syndrome vector $S_{1x4}$. In fact, as will be more clear in the following referring to the implementation of the ECC block, knowing the position of the symbol error, it is possible to generate a mask word $MW_{1x32}$ that, added to the data word $DWr_{1x32}$, allows obtaining the correct data word $Dwo_{1x32}$.
Referring now more specifically to the implementation according to an embodiment of the invention, each one of the elements of the parity matrix $H_{4x36}$ is a sub-matrix that belongs to a set of $2^4$-1 elements in $GF(2^4)$, which elements correspond to a particular $GF(2^4)$ primitive polynomial (of degree 4): $x^4+x+1$. Said set of $2^4$-1 elements includes a companion matrix $T_{4x4}$ (generated by the primitive polynomial $x^4+x+1$) and all the powers in $GF(2^4)$ of the companion matrix $T_{4x4}$, as can be seen in the Figure 2 (the set of powered elements of $T_{4x4}$ is isomorphic to $GF(2^4)$). It should be noted that the element $T_{4x4}^0$ represents the identity matrix $I_{4x4}$ and the element $T_{4x4}^\infty$ represents the all-zeros matrix. It should also be noted that the inverse of the generic element $T_{4x4}^i$ is $T_{4x4}^{-i} = T_{4x4}^{15-i}$, $0 \le i \le 14$. The parity matrix $H_{4x36}$, represented in $GF(2^4)$, is illustrated in Figure 3a, while the same parity matrix, represented in GF (2) ($H_{16x144}$, having 16 rows and 144 columns), is illustrated in Figure 3b. It has to be noted that replacing the $GF(2^4)$ elements of the parity matrix $H_{4x36}$ of Figure 3a with their binary representation of Figure 2, the parity matrix $H_{4x36}$ of Figure 3a translates into the parity matrix $H_{16x144}$ in GF(2) shown in Figure 3b.
Referring to the Figures 2, 3a and 3b together, it is possible to point out some features of the parity matrix ($H_{4x36}$ in $GF(2^4)$, or the equivalent one $H_{16x144}$ in GF(2)), whose advantages will be clear in the following, referring to the circuital implementation of the ECC block.
The parity matrix $H_{16x144}$ has a Maximum Row Weight, i.e., the maximum number of "1"s present on every row, that is equal to 22.
Moreover, in the set of all possible linearly independent columns of 4 elements belonging to the set of Figure 2, each column of the parity matrix $H_{4x36}$ has exactly two all-zeros matrices $0_{4x4}$, and at least one identity matrix $I_{4x4}$.
Finally, in each row of the parity matrix $H_{16x144}$ the "1"s are grouped in sets with less than 17 bit locations between the first and the last "1".
Referring now to Figure 4a, a more detailed functional block diagram of the memory device 100 is shown according to a first embodiment of the present invention.
During an operation in which a data word $DWi_{1x32}$ has to be stored in the memory matrix 105, such data word $DWi_{1x32}$ is supplied to a check block 405 of the ECC block 115, which provides the check word $KWi_{1x4}$ in response thereto. Consequently, the check block 405 is a circuital implementation of the relation:

$$(9) \qquad KWi_{1x4} = DWi_{1x32} H_{32x4}^{\prime T} ,$$

i.e., it represents the matrix $H_{32x4}^{\prime T}$ in the binary form ($H_{128x16}^{\prime T}$ in GF(2)). To implement such matrix $H_{128x16}^{\prime T}$, the check block 405 includes a tree of ex-or logic gates, not shown in the Figure. Given that each check symbol $k_1$ of the check

word $KWi_{1x4}$ is obtained by sums of products between data symbols $d_i$ and symbols belonging to rows of the matrix $H'_{4x32}$, and given that the results of such products are different from zero only for the "1"s in the corresponding rows, the complexity of the tree of ex-or logic gates depends on such numbers of "1"s. More particularly, every "1" in each row of the matrix $H'_{128x16}$ feeds said ex-or tree, so the fact that the parity matrix $H_{16x144}$ has a relatively low Maximum Row Weight (22) reduces the number of ex-or gates (typically with a fan-in of a few units) that are required for its implementation. Therefore, this feature lowers the number of logic gate layers (i.e., the maximum number of logic gates that an input signal may cross along the pathway toward the exit of the circuit) of the ex-or tree. Furthermore, the parity matrix $H_{16x144}$ has a total number and a distribution of "1"s such that for the generation of each bit of the check word $KWi_{1x4}$, the number of logic gate layers is balanced and kept minimum. Finally, the fact that in each row of the parity matrix $H_{16x144}$ the "1"s are grouped in sets with less than 17 bit locations between the first and the last "1" allows minimizing the routing for feeding the inputs of the ex-or gates of the tree with the highest fan-in.

The check word $KWi_{1x4}$ generated by the check block 405 is then supplied in concert with the data word $DWi_{1x32}$ (providing the code word $CWi_{1x36}$) to the read/write circuitry 110, which stores such code word $CWi_{1x36}$ into the memory matrix 105.

During a read operation, the read/write circuitry 110 provides the received code word $CWr_{1x36}$ (stored in the memory matrix 105) to the ECC block 115. As previously described, the received code word $CWr_{1x36}$ may be a wrong version of the stored code word $CWi_{1x36}$, that is, $CWr_{1x36} = CWi_{1x36} + E_{1x36}$. Such received code word $CWr_{1x36}$ includes a data word $DWr_{1x32}$ and a check word $KWr_{1x4}$. The data word $DWr_{1x32}$ is supplied to a check block 410, whose structure is identical to the one of the check block 405. In fact, the check block 410 provides the recalculated check word $KWc_{1x4}$ in response to the data word $DWr_{1x32}$, according to the following equation:

$$(10) \qquad\qquad KWc_{1x4} = DWr_{1x32}H'^{T}_{32x4} \ ,$$

i.e., it represents again the matrix $H'^{T}_{32x4}$ in the binary form ($H'^{T}_{128x16}$ in GF(2)).

Such recalculated check word $KWc_{1x4}$ is module-2 summed with the check word $KWr_{1x4}$ in an ex-or block 415, that consequently provides the syndrome vector $S_{1x4}$, as previously explained.

The received code word $CWr_{1x36}$ and the syndrome vector $S_{1x4}$ are fed to a corrector block 420, which consequently provides the data word $DWo_{1x32}$ to the outside. In absence of any error (i.e., when the error word $E_{1x36}$ is equal to $0_{1x36}$), the data word $DWo_{1x32}$ results equal to the corresponding stored data word $DWi_{1x32}$. In presence of a single symbol error, the corrector block 420 performs a correction operation, and the provided data word $DWo_{1x32}$ results again equal to the corresponding stored data word $DWi_{1x32}$. Finally, in presence of more than one symbol error, the corrector block 420 provides a data word $DWo_{1x32}$ that may differ from the corresponding stored data word $DWi_{1x32}$.

Referring to Figure 4b, a detailed functional representation diagram of the ECC block 115 is shown according to a second embodiment of the present invention. As seen in the description of the Figure 4a, the processes of generating the code word $KWi_{1x4}$ (writing operation) and the recalculated check word $KWc_{1x4}$ (reading operation) make use of two identical blocks, that is, the check blocks 405 and 410. Consequently, the complexity of the ECC block 115 may be reduced using only one of such identical check blocks 405 and 410 (405 in the Figure), with the introduction of a multiplexer block 425.

The multiplexer block 425 comprises two input terminals, that is, a first terminal for receiving the data word $DWi_{1x32}$ and a second terminal for receiving the data word $DWr_{1x32}$; a selection terminal receives a read/write signal r/w, and an output terminal is connected to the check block 405. During a write operation, the read/write signal r/w takes a value that controls the multiplexer block 425 to provide the data word $DWi_{1x32}$ to the check block 405 (first terminal selected); conversely, during a read operation, the read/write signal r/w takes a value that controls the multiplexer block 425 to provide the data word $DWr_{1x32}$ to the check block 405 (second terminal selected).

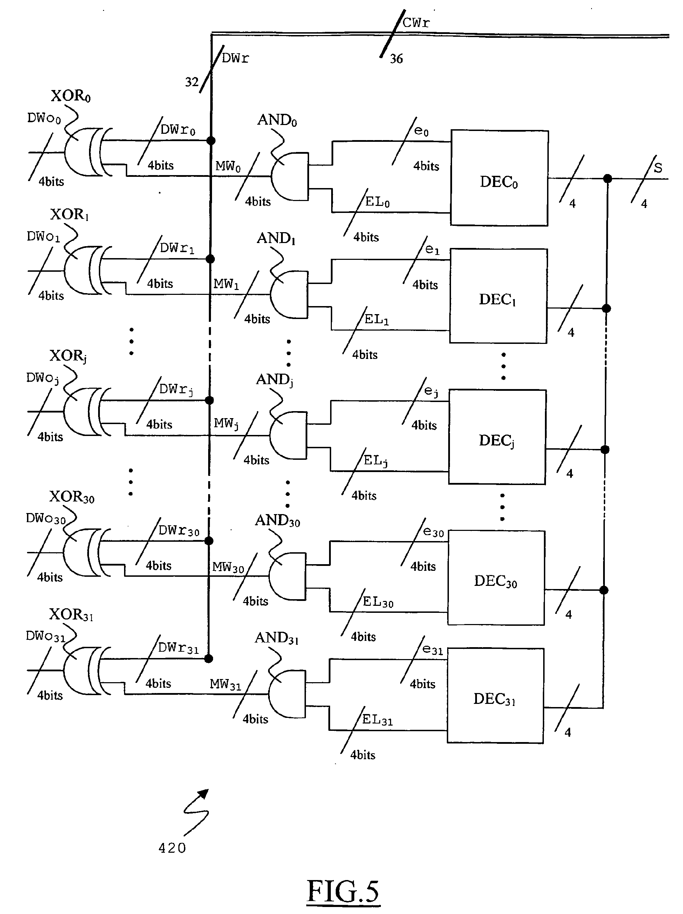

Figure 5 is a more detailed view of the corrector block 420. The corrector block 420 is input the received code word $CWr_{1x36}$ (from the read/write circuitry) and the syndrome vector $S_{1x4}$ (from the ex-or block), and provides the data word $DWo_{1x32}$ to the outside.

The corrector block 420 includes a plurality of syndrome decoders $DEC_j$ (J=0,...,31), each one corresponding to a column of the matrix $H'_{4x32}$. Every syndrome decoder $DEC_j$ receives the syndrome vector $S_{1x4}$ and consequently provides a 4-bit error word $e_j$ (representing the possible error "e" that may occur in correspondence of the j-th symbol) and a 4-bit error location signal $EL_j$. Each one of the four couples of bits (comprising a bit of the error word $e_j$ and a corresponding bit of the error location signal $EL_j$) is fed to the input of a logic AND gate; this is represented in Figure 5 by an $AND_j$ gate (comprising four logic AND gates) that receives the four couples of bits from the error word $e_j$ and from the error location signal $EL_j$, and provides a 4-bit word $MW_j$, which represents the j-th symbol of the mask word $MW_{1x32}$. Each word $MW_j$ is provided together with a corresponding 4-bit word $DWr_j$, representing the j-th symbol of the data word $DWr_{1x32}$, to a $XOR_j$ gate. At the same way of the $AND_j$ gate, the $XOR_j$ gate includes four logic XOR gates, each one receiving a couple of bits from the data word $DWr_j$ and from the word $MW_j$. Finally, the $XOR_j$ gate provides a 4-bit word $DWo_j$, representing the j-th symbol of the data word $DWo_{1x32}$ to the outside.

Each syndrome decoder $DEC_j$ corresponds to a symbol of the data word $DWr_{1x32}$, and can recognize if an error has occurred in association with its position. In other words, the operations performed by the syndrome decoder $DEC_j$ are an implementation of a simplified version of the equation (6), with reference to the j-th column of the matrix $H'_{4x32}$. It has to be underlined that the equation (6) refers to the parity matrix $H_{4x36}$, while the operations carried out by the syndrome decoder $DEC_j$ imply the use of the equations corresponding to the matrix $H'_{4x32}$. For this reason, a 32-symbol error word $E_{1x32}$ is provided, because the purpose of the corrector block 420 is to correct the data word $DWr_{1x32}$, and not the received code word $CWr_{1x36}$ (not necessary).

For example, if an error on the 25-th symbol of the received code word $CWr_{1x36}$ occurs, the error word $E_{1x36}$ is such as to have an error symbol "e" on its 25-th column. Consequently, according to equation (6), such error word $E_{1x36}$ selects the 25-th column of the parity matrix $H_{4x36}$ (that is, $[I\ T^2\ 0\ 0]^T$):

$$(11) \qquad S_{4x1}^T = H_{4x36} E_{36x1}^T \Rightarrow \begin{cases} s_0 = e^T \\ s_1 = T^2 e^T \\ s_2 = 0 \\ s_3 = 0 \end{cases} \Rightarrow S_1 = T^2 s_0,$$

wherein the syndrome vector $S_{1x4}$ is equal to $[s_3\ s_2\ s_1\ s_0]$, with $s_3$-$s_0$ belonging to $GF(2^4)$. This means that in case of an error in the 25-th symbol the equation (11) must be verified, i.e., the four symbols $s_3, s_2, s_1, s_0$ of the syndrome vector $S_{1x4}$ must verify the relations of the previous system. Those equations in $GF(2^4)$ can be transposed in $GF(2)$, giving that at the syndrome vector $S_{1x4} = [s_3\ s_2\ s_1\ s_0]$, with $s_3$-$s_0$ belonging to $GF(2^4)$, corresponds the syndrome vector $S_{1x16} = [s'_{15}\ s'_{14} \dots s'_1\ s'_0]$, with $s_{15}$-$s_0$ belonging to $GF(2)$:

$$(12) \qquad s_1 = T^2 s_0 \Rightarrow \begin{bmatrix} s'_7 \\ s'_6 \\ s'_5 \\ s'_4 \end{bmatrix} = \begin{bmatrix} 0 & 0 & 1 & 0 \\ 0 & 0 & 1 & 1 \\ 1 & 0 & 0 & 1 \\ 0 & 1 & 0 & 0 \end{bmatrix} \begin{bmatrix} s'_3 \\ s'_2 \\ s'_1 \\ s'_0 \end{bmatrix} \Rightarrow \begin{cases} s'_1 + s'_7 = 0 \\ s'_1 + s'_0 + s'_6 = 0 \\ s'_3 + s'_0 + s'_5 = 0 \\ s'_2 + s'_4 = 0 \end{cases}$$

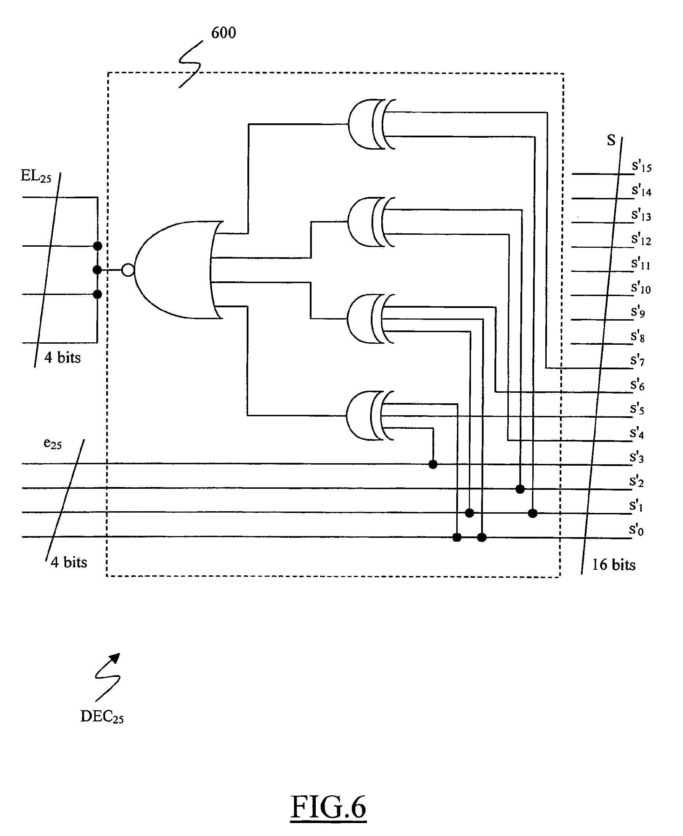

Therefore, each column of the parity matrix $H_{4x36}$ corresponds to a set of four equations, that identify it. Moreover, the syndrome decoder $DEC_j$ is structured in such a way that the corresponding error location signal $EL_j$ takes a high logic value (each one of the 4 bits set to "1") if the respective system of equations is verified, and it takes a low logic value (each one of the 4 bits set to "0") otherwise. Referring to the previously described case (error on the 25-th symbol), an example of circuit implementing the set of corresponding equations and the generation of the error location signal $EL_{25}$ is illustrated in Figure 6. The 16 bits representing the syndrome vector $S_{1x16}$ in $GF(2)$ are provided to a combinatorial network 600, that provides the 4 bits forming the error location signal $EL_{25}$ corresponding to the set of equations (12), and the 4 bits forming the error word $e_{25}$.

It has to be noted that the proposed parity matrix $H_{4x36}$ has been designed in such a way to balance the requirements of having a low Maximum Row Weight and having columns formed by elements in $GF(2^4)$ that are advantageous for its circuital implementation. In fact, the elements in $GF(2^4)$ used in the parity matrix $H_{4x36}$ ($0_{4x4}, I_{4x4}, T_{4x4}, T^2_{4x4}, T^3_{4x4}, T^{14}_{4x4}$) imply syndrome decoders $DEC_j$ including XOR gates having fan-in less or equal to three.

Referring back to Figure 5, if no symbol error occurs, the error word $E_{1x36}$ and the syndrome vector $S_{1x4}$ are all-zero vectors. As a consequence, all the 32 error location signals $EL_j$ take low logic values, because no system of equations is verified, and thus also the mask word $MW_{1x32}$ that is fed to the 32 $XOR_j$ gates becomes an all-zero vector. This implies that the data word $DWo_{1x32}$ provided to the outside by the 32 $XOR_j$ gates is equal to the data word $DWr_{1x32}$ (correction not performed).

If an error "e" occurs in the symbol j-th, the word $MW_j$, representing the j-th symbol of the mask word $MW_{1x32}$, is driven to take the value of the error vector $e_j$ by the corresponding syndrome decoder $DEC_j$, and is fed to the $XOR_j$ gate. In this way, the word $DWo_j$ takes a value given by the modulo-2 sum between the data word $DWr_j$ and the word $MW_j$, and thus the j-th symbol is corrected.

It is important to note that the parity matrix $H_{4x36}$ includes at least one identity element $I_{4x4}$ for each column;

therefore, at least one of the four equations describing the syndrome vector $S_{1x4}$ with reference to the column itself in $GF(2^4)$ is an equality with the error symbol "e" (e.g., $s_0 = e^T$ in the equations (11) for the example of the 25-th symbol). In this way, every j-th column of the parity matrix $H_{4x36}$ has a syndrome decoder $DEC_j$ that regenerates the corresponding error vector $e_j$. This feature assumes great importance, because it is possible that in response to a single symbol error more than one error location signals $EL_j$ might be asserted to a high logic value; however, only for the right syndrome decoder $DEC_j$ there is the non all-zeros error vector $e_j$ in the right position of the syndrome vector $S_{1x4}$.

Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

For example, even though in the preceding description reference has been made to a parity matrix of 16x144 bits, the same concepts also apply if the parity matrix is a matrix of 144x16 bits, with all the data words, code words, and check words that are represented by column vectors instead by row vectors.

Similar considerations apply if the ECC block is implemented in different ways. In particular, the concepts of the present invention are also applicable when the corrector block includes different logic gates carrying out the same operations.

In any case, the systematic form of the code can be achieved even if the data symbols and the check symbols have different positions in the code word (with the parity matrix that is updated accordingly).

It is not excluded that the ECC block could be used within a memory device different than a flash-type one.

Moreover, it will be apparent to those skilled in the art that the additional features providing further advantages are not essential for carrying out the invention, and may be omitted or replaced with different features.

For example, an implementation in which the parity matrix is obtained from the one described above as a permutation of its columns in GF(2), instead of in $GF(2^4)$, is not excluded.

The use of the proposed solution in a non-systematic code is within the scope of the invention.

In any case, it is possible to implement the solution of the invention in standard memories at 2 levels, or even in other memories (such as DRAMs).

Likewise, it is contemplated that the ECC block could be used in devices different than memories. For example, a first check block may be used within a transmitter device, and another check block may be used within a receiver device for detecting data errors on a transmission network.

## Claims

1.  An error correction device (115) including:

    means (405) for generating a check word (KW) of 16 bits from a data word (DW) of 128 bits according to a parity matrix (H) of 16x144 bits, the check word being capable of providing information about a correctness of the data word,
    **characterized in that**
    the parity matrix consists of any permutation of the following 144 vectors of 16 bits :

$$
\begin{bmatrix}1\\0\\0\\0\\0\\0\\0\\0\\0\\0\\0\\0\\0\\1\\0\\0\\0\end{bmatrix}
\begin{bmatrix}0\\1\\0\\0\\0\\0\\0\\0\\0\\0\\0\\0\\0\\0\\1\\0\\0\end{bmatrix}
\begin{bmatrix}0\\0\\1\\0\\0\\0\\0\\0\\0\\0\\0\\0\\0\\0\\0\\1\\0\end{bmatrix}
\begin{bmatrix}0\\0\\0\\1\\0\\0\\0\\0\\0\\0\\0\\0\\0\\0\\0\\0\\1\end{bmatrix}
\begin{bmatrix}0\\0\\1\\0\\0\\0\\0\\0\\0\\0\\0\\0\\0\\1\\0\\0\\1\end{bmatrix}
\begin{bmatrix}0\\0\\0\\1\\0\\0\\0\\0\\0\\0\\0\\0\\0\\0\\1\\0\\0\end{bmatrix}
\begin{bmatrix}1\\1\\0\\0\\0\\0\\0\\0\\0\\0\\0\\0\\0\\0\\0\\1\\0\end{bmatrix}
\begin{bmatrix}0\\1\\1\\0\\0\\0\\0\\0\\0\\0\\0\\0\\0\\0\\0\\0\\1\end{bmatrix}
\begin{bmatrix}1\\0\\0\\0\\0\\0\\0\\0\\0\\0\\0\\0\\0\\0\\0\\1\\0\end{bmatrix}
\begin{bmatrix}0\\1\\0\\0\\0\\0\\0\\0\\0\\0\\0\\0\\0\\0\\0\\0\\1\end{bmatrix}
$$

$$
\begin{bmatrix}0\\0\\1\\0\\0\\0\\0\\0\\0\\0\\0\\0\\0\\1\\1\\0\\0\end{bmatrix}
\begin{bmatrix}0\\0\\0\\1\\0\\0\\0\\0\\0\\0\\0\\0\\0\\0\\1\\1\\0\end{bmatrix}
\begin{bmatrix}0\\0\\0\\1\\0\\0\\0\\0\\0\\0\\0\\0\\0\\1\\0\\0\\0\end{bmatrix}
\begin{bmatrix}1\\1\\0\\0\\0\\0\\0\\0\\0\\0\\0\\0\\0\\0\\1\\0\\0\end{bmatrix}
\begin{bmatrix}0\\1\\1\\0\\0\\0\\0\\0\\0\\0\\0\\0\\0\\0\\0\\1\\0\end{bmatrix}
\begin{bmatrix}0\\0\\1\\1\\0\\0\\0\\0\\0\\0\\0\\0\\0\\0\\0\\0\\1\end{bmatrix}
\begin{bmatrix}1\\0\\0\\0\\0\\0\\0\\0\\0\\0\\0\\0\\0\\0\\1\\0\\0\end{bmatrix}
\begin{bmatrix}0\\1\\0\\0\\0\\0\\0\\0\\0\\0\\0\\0\\0\\0\\0\\0\\0\end{bmatrix}
\begin{bmatrix}0\\0\\1\\0\\0\\0\\0\\0\\0\\0\\0\\0\\0\\0\\0\\1\\0\end{bmatrix}
\begin{bmatrix}0\\0\\0\\1\\0\\0\\0\\0\\0\\0\\0\\0\\0\\1\\1\\0\\0\end{bmatrix}
$$

$$
\begin{bmatrix}0\\0\\0\\0\\0\\0\\0\\0\\1\\0\\0\\0\\1\\0\\0\\0\\0\end{bmatrix}
\begin{bmatrix}0\\0\\0\\0\\0\\0\\0\\0\\0\\1\\0\\0\\0\\1\\0\\0\\0\end{bmatrix}
\begin{bmatrix}0\\0\\0\\0\\0\\0\\0\\0\\0\\0\\1\\0\\0\\0\\1\\0\\0\end{bmatrix}
\begin{bmatrix}0\\0\\0\\0\\0\\0\\0\\0\\0\\0\\0\\1\\0\\0\\0\\1\\0\end{bmatrix}
\begin{bmatrix}0\\0\\0\\0\\0\\0\\0\\0\\0\\0\\0\\0\\1\\0\\1\\0\\0\end{bmatrix}
\begin{bmatrix}0\\0\\0\\0\\0\\0\\0\\0\\0\\0\\0\\0\\0\\1\\0\\1\\0\end{bmatrix}
\begin{bmatrix}0\\0\\0\\0\\0\\0\\0\\0\\1\\1\\0\\0\\0\\0\\1\\0\\1\end{bmatrix}
\begin{bmatrix}0\\0\\0\\0\\0\\0\\0\\0\\0\\1\\1\\0\\0\\0\\0\\0\\1\end{bmatrix}
\begin{bmatrix}0\\0\\0\\0\\0\\0\\0\\0\\1\\0\\0\\0\\0\\0\\0\\1\\0\end{bmatrix}
\begin{bmatrix}0\\0\\0\\0\\0\\0\\0\\0\\0\\1\\0\\0\\0\\0\\0\\0\\1\end{bmatrix}
$$

$$
\begin{bmatrix}0\\1\\0\\0\\0\\0\\0\\0\\0\\0\\1\\1\\1\\0\\0\\0\\0\end{bmatrix}
\begin{bmatrix}0\\0\\0\\0\\0\\0\\0\\0\\0\\0\\0\\1\\0\\1\\1\\0\\0\end{bmatrix}
\begin{bmatrix}0\\0\\0\\0\\1\\0\\0\\0\\1\\1\\0\\0\\0\\0\\0\\0\\0\end{bmatrix}
\begin{bmatrix}0\\0\\0\\0\\0\\1\\0\\0\\0\\1\\1\\0\\0\\0\\0\\0\\0\end{bmatrix}
\begin{bmatrix}0\\0\\0\\0\\0\\0\\1\\1\\1\\0\\1\\1\\0\\0\\0\\0\\0\end{bmatrix}
\begin{bmatrix}0\\0\\0\\0\\0\\0\\0\\0\\0\\0\\0\\0\\0\\0\\0\\0\\0\end{bmatrix}
\begin{bmatrix}1\\0\\0\\0\\1\\0\\0\\0\\0\\0\\0\\0\\0\\0\\0\\0\\0\end{bmatrix}
\begin{bmatrix}0\\0\\0\\0\\0\\0\\0\\0\\0\\0\\0\\0\\0\\0\\0\\0\\0\end{bmatrix}
\begin{bmatrix}0\\1\\1\\0\\0\\0\\0\\0\\0\\0\\0\\0\\0\\0\\0\\0\\0\end{bmatrix}
\begin{bmatrix}0\\0\\1\\1\\0\\1\\0\\0\\0\\0\\0\\0\\0\\0\\0\\0\\0\end{bmatrix}
$$

$$
\begin{bmatrix}1\\0\\0\\0\\0\\0\\1\\0\\0\\0\\0\\0\\0\\0\\0\\0\\0\end{bmatrix}
\begin{bmatrix}0\\1\\0\\0\\0\\0\\0\\1\\0\\0\\0\\0\\0\\0\\0\\0\\0\end{bmatrix}
\begin{bmatrix}0\\0\\1\\0\\1\\1\\0\\0\\0\\0\\0\\0\\0\\0\\0\\0\\0\end{bmatrix}
\begin{bmatrix}0\\0\\0\\1\\0\\1\\1\\0\\0\\0\\0\\0\\0\\0\\0\\0\\0\end{bmatrix}
\begin{bmatrix}0\\0\\0\\0\\1\\0\\0\\0\\0\\0\\0\\0\\0\\0\\0\\0\\0\end{bmatrix}
\begin{bmatrix}0\\0\\0\\1\\0\\1\\0\\0\\0\\0\\0\\0\\0\\0\\0\\0\\0\end{bmatrix}
\begin{bmatrix}1\\1\\0\\0\\0\\0\\1\\0\\0\\0\\0\\0\\0\\0\\0\\0\\0\end{bmatrix}
\begin{bmatrix}0\\1\\1\\0\\0\\0\\0\\1\\0\\0\\0\\0\\0\\0\\0\\0\\0\end{bmatrix}
\begin{bmatrix}1\\0\\0\\0\\0\\0\\0\\0\\0\\0\\0\\0\\0\\0\\1\\0\\0\end{bmatrix}
\begin{bmatrix}0\\1\\0\\0\\0\\0\\0\\0\\0\\0\\0\\0\\0\\1\\0\\0\\0\end{bmatrix}
$$

$$
\begin{bmatrix}0\\0\\1\\0\\0\\0\\0\\0\\0\\0\\0\\0\\1\\0\\0\\0\\0\end{bmatrix}
\begin{bmatrix}0\\0\\0\\1\\0\\0\\0\\0\\0\\1\\0\\0\\1\\0\\0\\0\\0\end{bmatrix}
\begin{bmatrix}0\\0\\0\\0\\0\\0\\0\\0\\1\\1\\0\\0\\0\\0\\0\\0\\0\end{bmatrix}
\begin{bmatrix}0\\0\\0\\0\\0\\0\\0\\0\\1\\0\\1\\0\\0\\0\\0\\0\\0\end{bmatrix}
\begin{bmatrix}0\\0\\0\\0\\0\\0\\0\\0\\0\\0\\1\\1\\1\\0\\0\\0\\1\end{bmatrix}
\begin{bmatrix}0\\0\\0\\0\\0\\0\\0\\0\\0\\0\\1\\1\\0\\1\\1\\0\\0\end{bmatrix}
\begin{bmatrix}0\\0\\0\\0\\0\\0\\0\\0\\1\\1\\0\\0\\0\\1\\1\\1\\0\end{bmatrix}
\begin{bmatrix}0\\0\\0\\0\\0\\0\\0\\0\\0\\0\\1\\1\\1\\0\\0\\1\\0\end{bmatrix}
\begin{bmatrix}0\\0\\0\\0\\0\\0\\0\\0\\1\\1\\1\\0\\0\\0\\1\\0\\0\end{bmatrix}
\begin{bmatrix}0\\0\\0\\1\\0\\0\\0\\0\\0\\0\\1\\1\\1\\0\\0\\0\\1\end{bmatrix}
$$

$$
\begin{bmatrix}0\\0\\0\\0\\0\\0\\0\\0\\0\\1\\0\\0\\1\\0\\0\\0\end{bmatrix}
\begin{bmatrix}0\\0\\0\\0\\0\\0\\0\\0\\0\\0\\1\\0\\0\\1\\0\\0\end{bmatrix}
\begin{bmatrix}0\\0\\0\\0\\0\\0\\0\\0\\0\\0\\0\\1\\0\\0\\1\\0\end{bmatrix}
\begin{bmatrix}0\\0\\0\\0\\0\\0\\0\\0\\1\\1\\0\\0\\0\\0\\0\\1\end{bmatrix}
\begin{bmatrix}1\\0\\0\\0\\0\\0\\0\\0\\1\\0\\0\\0\\0\\0\\0\\0\end{bmatrix}
\begin{bmatrix}0\\1\\0\\0\\0\\0\\0\\0\\0\\1\\0\\0\\0\\0\\0\\0\end{bmatrix}
\begin{bmatrix}0\\0\\1\\0\\0\\0\\0\\0\\0\\0\\1\\0\\0\\0\\0\\0\end{bmatrix}
\begin{bmatrix}0\\0\\0\\1\\1\\0\\0\\0\\0\\0\\0\\1\\0\\0\\0\\0\end{bmatrix}
\begin{bmatrix}1\\0\\0\\1\\0\\0\\0\\0\\1\\0\\0\\0\\0\\0\\0\\0\end{bmatrix}
\begin{bmatrix}1\\0\\0\\0\\0\\0\\0\\0\\0\\1\\0\\0\\0\\0\\0\\0\end{bmatrix}
\begin{bmatrix}0\\1\\0\\0\\0\\0\\0\\0\\0\\0\\1\\0\\0\\0\\0\\0\end{bmatrix}
\begin{bmatrix}0\\0\\1\\0\\0\\0\\0\\0\\0\\0\\0\\1\\0\\0\\0\\0\end{bmatrix}
\begin{bmatrix}1\\0\\0\\0\\0\\0\\0\\0\\1\\0\\0\\1\\0\\0\\0\\0\end{bmatrix}
\begin{bmatrix}0\\1\\0\\0\\0\\0\\0\\0\\1\\0\\0\\0\\0\\0\\0\\0\end{bmatrix}
\begin{bmatrix}0\\0\\1\\0\\0\\0\\0\\0\\0\\1\\0\\0\\0\\0\\0\\0\end{bmatrix}
\begin{bmatrix}0\\0\\0\\1\\0\\0\\0\\0\\0\\0\\1\\0\\0\\0\\0\\0\end{bmatrix}
\begin{bmatrix}0\\0\\1\\0\\0\\0\\0\\0\\1\\0\\0\\0\\0\\0\\0\\0\end{bmatrix}
\begin{bmatrix}0\\0\\0\\1\\0\\0\\0\\0\\0\\1\\0\\0\\0\\0\\0\\0\end{bmatrix}
\begin{bmatrix}1\\1\\0\\0\\0\\0\\0\\0\\0\\0\\1\\0\\0\\0\\0\\0\end{bmatrix}
\begin{bmatrix}0\\1\\1\\0\\0\\0\\0\\0\\0\\0\\0\\1\\0\\0\\0\\0\end{bmatrix}
$$

$$
\begin{bmatrix}1\\0\\0\\0\\0\\0\\0\\0\\0\\0\\1\\0\\0\\0\\0\\0\end{bmatrix}
\begin{bmatrix}0\\1\\0\\0\\0\\0\\0\\0\\0\\0\\0\\1\\0\\0\\0\\0\end{bmatrix}
\begin{bmatrix}0\\0\\1\\0\\0\\0\\0\\0\\1\\1\\0\\0\\0\\0\\0\\0\end{bmatrix}
\begin{bmatrix}0\\0\\0\\1\\0\\0\\0\\0\\0\\1\\1\\0\\0\\0\\0\\0\end{bmatrix}
\begin{bmatrix}1\\0\\0\\0\\1\\0\\0\\1\\0\\0\\0\\0\\0\\0\\0\\0\end{bmatrix}
\begin{bmatrix}0\\1\\0\\0\\1\\0\\0\\0\\0\\0\\0\\0\\0\\0\\0\\0\end{bmatrix}
\begin{bmatrix}0\\0\\1\\0\\0\\1\\0\\0\\0\\0\\0\\0\\0\\0\\0\\0\end{bmatrix}
\begin{bmatrix}0\\0\\0\\1\\0\\0\\1\\0\\0\\0\\0\\0\\0\\0\\0\\0\end{bmatrix}
\begin{bmatrix}1\\0\\0\\0\\0\\1\\0\\0\\0\\0\\0\\0\\0\\0\\0\\0\end{bmatrix}
\begin{bmatrix}0\\1\\0\\0\\0\\0\\1\\0\\0\\0\\0\\0\\0\\0\\0\\0\end{bmatrix}
\begin{bmatrix}0\\0\\1\\0\\0\\1\\0\\1\\0\\0\\0\\0\\0\\0\\0\\0\end{bmatrix}
\begin{bmatrix}0\\0\\0\\1\\1\\1\\0\\0\\0\\0\\0\\0\\0\\0\\0\\0\end{bmatrix}
\begin{bmatrix}0\\0\\0\\0\\1\\0\\0\\0\\0\\0\\0\\0\\0\\1\\0\\0\end{bmatrix}
\begin{bmatrix}0\\0\\0\\0\\0\\1\\0\\0\\0\\0\\0\\0\\0\\0\\1\\0\end{bmatrix}
\begin{bmatrix}0\\0\\0\\0\\0\\0\\1\\0\\0\\0\\0\\0\\0\\0\\0\\1\end{bmatrix}
\begin{bmatrix}0\\0\\0\\0\\1\\0\\0\\1\\0\\0\\0\\0\\0\\0\\0\\0\end{bmatrix}
\begin{bmatrix}0\\0\\0\\0\\1\\0\\0\\1\\0\\0\\0\\0\\1\\0\\0\\0\end{bmatrix}
\begin{bmatrix}0\\0\\0\\0\\0\\1\\0\\0\\0\\0\\0\\0\\0\\1\\0\\0\end{bmatrix}
\begin{bmatrix}0\\0\\0\\1\\0\\0\\0\\0\\0\\0\\0\\0\\0\\0\\1\\0\end{bmatrix}
\begin{bmatrix}0\\0\\0\\0\\0\\1\\0\\0\\0\\0\\0\\0\\0\\0\\0\\1\end{bmatrix}
$$

$$
\begin{bmatrix}0\\0\\0\\0\\1\\0\\0\\0\\0\\0\\0\\0\\0\\0\\0\\0\\0\\1\\0\end{bmatrix}
\begin{bmatrix}0\\0\\0\\0\\0\\1\\0\\0\\0\\0\\0\\0\\0\\0\\0\\0\\0\\0\\1\end{bmatrix}
\begin{bmatrix}0\\0\\0\\0\\0\\0\\1\\0\\0\\0\\0\\0\\1\\1\\0\\0\\1\\1\\0\end{bmatrix}
\begin{bmatrix}0\\0\\0\\0\\0\\0\\0\\1\\0\\0\\0\\0\\0\\1\\1\\0\\0\\1\\0\end{bmatrix}
\begin{bmatrix}0\\0\\0\\0\\0\\0\\1\\0\\0\\0\\0\\0\\1\\0\\0\\0\\1\\0\\0\end{bmatrix}
\begin{bmatrix}0\\0\\0\\0\\0\\0\\0\\1\\0\\0\\0\\0\\0\\1\\0\\0\\0\\0\\0\end{bmatrix}
\begin{bmatrix}0\\0\\0\\0\\1\\1\\0\\0\\0\\0\\0\\0\\0\\0\\0\\0\\1\\0\\0\end{bmatrix}
\begin{bmatrix}0\\0\\0\\0\\0\\1\\1\\0\\0\\0\\0\\0\\0\\0\\0\\0\\0\\0\\1\end{bmatrix}
\begin{bmatrix}0\\0\\0\\0\\0\\1\\0\\0\\0\\0\\0\\0\\1\\0\\0\\0\\0\\0\\0\end{bmatrix}
\begin{bmatrix}0\\0\\0\\0\\0\\0\\1\\0\\1\\0\\0\\0\\0\\1\\0\\0\\0\\0\\0\end{bmatrix}
\begin{bmatrix}0\\0\\0\\0\\0\\0\\0\\1\\0\\1\\0\\0\\0\\0\\0\\0\\0\\1\\0\end{bmatrix}
\begin{bmatrix}0\\0\\0\\0\\1\\1\\0\\0\\0\\0\\0\\0\\0\\0\\0\\1\\0\\0\\1\end{bmatrix}
\begin{bmatrix}0\\0\\0\\0\\1\\0\\0\\0\\0\\0\\1\\0\\0\\0\\0\\0\\0\\0\\0\end{bmatrix}
\begin{bmatrix}0\\0\\0\\0\\0\\1\\0\\0\\0\\0\\0\\1\\0\\0\\0\\0\\0\\0\\0\end{bmatrix}
\begin{bmatrix}0\\0\\0\\0\\0\\0\\1\\0\\1\\1\\0\\0\\0\\0\\0\\0\\0\\0\\0\end{bmatrix}
\begin{bmatrix}0\\0\\0\\0\\0\\0\\0\\1\\0\\1\\1\\0\\0\\0\\0\\0\\0\\0\\0\end{bmatrix}
\begin{bmatrix}0\\0\\0\\0\\0\\0\\1\\1\\1\\0\\0\\0\\0\\0\\0\\0\\0\\0\\0\end{bmatrix}
\begin{bmatrix}0\\0\\0\\0\\1\\1\\0\\0\\0\\0\\0\\0\\0\\0\\0\\0\\0\\0\\0\end{bmatrix}
\begin{bmatrix}0\\0\\0\\0\\0\\1\\1\\0\\0\\1\\1\\0\\0\\0\\0\\0\\0\\0\\0\end{bmatrix}
$$

$$
\begin{bmatrix}0\\0\\0\\0\\1\\0\\0\\1\\1\\0\\0\\0\\0\\0\\0\\0\\0\\0\\0\\0\end{bmatrix}
\begin{bmatrix}0\\0\\0\\0\\1\\0\\0\\0\\0\\0\\1\\0\\0\\0\\0\\0\\0\\0\\0\\0\end{bmatrix}
\begin{bmatrix}0\\0\\0\\0\\0\\1\\0\\0\\0\\0\\0\\1\\0\\0\\0\\0\\0\\0\\0\\0\end{bmatrix}
\begin{bmatrix}0\\0\\0\\0\\0\\0\\1\\0\\0\\0\\0\\0\\1\\0\\0\\0\\0\\0\\0\\0\end{bmatrix}
\begin{bmatrix}0\\0\\0\\0\\1\\0\\0\\0\\1\\0\\0\\0\\0\\1\\0\\0\\0\\0\\0\\0\end{bmatrix}
\begin{bmatrix}0\\0\\0\\0\\0\\1\\0\\0\\1\\0\\0\\0\\0\\0\\0\\0\\0\\0\\0\\0\end{bmatrix}
\begin{bmatrix}0\\0\\0\\0\\0\\0\\1\\0\\0\\1\\0\\0\\0\\0\\0\\0\\0\\0\\0\\0\end{bmatrix}
\begin{bmatrix}0\\0\\0\\0\\0\\0\\0\\1\\0\\0\\1\\0\\0\\0\\0\\0\\0\\0\\0\\0\end{bmatrix}
\begin{bmatrix}1\\1\\0\\0\\0\\0\\0\\0\\0\\0\\0\\0\\0\\0\\0\\0\\0\\0\\0\\0\end{bmatrix}
\begin{bmatrix}0\\1\\0\\0\\0\\0\\0\\0\\0\\0\\0\\0\\0\\0\\0\\0\\0\\0\\0\\0\end{bmatrix}
\begin{bmatrix}0\\0\\1\\0\\0\\0\\0\\0\\0\\0\\0\\0\\0\\0\\0\\0\\0\\0\\0\\0\end{bmatrix}
\begin{bmatrix}0\\0\\0\\1\\0\\0\\0\\0\\0\\0\\0\\0\\0\\0\\0\\0\\0\\0\\0\\0\end{bmatrix}
\begin{bmatrix}0\\0\\0\\0\\1\\0\\0\\0\\0\\0\\0\\0\\0\\0\\0\\0\\0\\0\\0\\0\end{bmatrix}
\begin{bmatrix}0\\0\\0\\0\\0\\1\\0\\0\\0\\0\\0\\0\\0\\0\\0\\0\\0\\0\\0\\0\end{bmatrix}
\begin{bmatrix}0\\0\\0\\0\\0\\0\\1\\0\\0\\0\\0\\0\\0\\0\\0\\0\\0\\0\\0\\0\end{bmatrix}
\begin{bmatrix}0\\0\\0\\0\\0\\0\\0\\1\\0\\0\\0\\0\\0\\0\\0\\0\\0\\0\\0\\0\end{bmatrix}
\begin{bmatrix}0\\0\\0\\0\\0\\0\\0\\0\\1\\0\\0\\0\\0\\0\\0\\0\\0\\0\\0\\0\end{bmatrix}
\begin{bmatrix}0\\0\\0\\0\\0\\0\\0\\0\\0\\1\\0\\0\\0\\0\\0\\0\\0\\0\\0\\0\end{bmatrix}
\begin{bmatrix}0\\0\\0\\0\\0\\0\\0\\0\\0\\0\\1\\0\\0\\0\\0\\0\\0\\0\\0\\0\end{bmatrix}
$$

$$
\begin{bmatrix} 0 \\ 0 \\ 0 \\ 0 \\ 0 \\ 0 \\ 0 \\ 0 \\ 0 \\ 0 \\ 0 \\ 0 \\ 1 \\ 0 \\ 0 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 1 \\ 0 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 0 \\ 1 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 0 \\ 0 \\ 1 \end{bmatrix}
$$

2.   The error correction device (115) of claim 1, further including:

means for generating a code word (CWi) of 144 bits including the 128 bits of the data word (DWi) and the 16 bits of the check word (KWi);

means for extracting a further data word (DWr) of 128 bits and a further check word (KWr) of 16 bits from a further code word (CWr) of 144 bits;

means (405;410) for generating a still further check word (KWc) of 16 bits from the further data word according to the parity matrix; and

means (415,420) for correcting the further data word according to a comparison between the further check word and the still further check word.

3.   The error correction device (115) of claim 1 or 2, wherein:

each data word (DWr,DWi) consists of 32 symbols in $GF(2^4)$, each symbol consisting of 4 bits;

each check word (KWi,KWr,KWc) consists of 4 symbols;

each code word (CWi,CWr) consists of 36 symbols including the 32 symbols of the corresponding data word and the 4 symbols of the corresponding check word; and

the parity matrix (H) consists of 4x36 symbols consisting of any permutation of the following 36 vectors of 4 symbols:

$$
\begin{bmatrix} I \\ 0 \\ 0 \\ I \end{bmatrix}
\begin{bmatrix} T^2 \\ 0 \\ 0 \\ I \end{bmatrix}
\begin{bmatrix} I \\ 0 \\ 0 \\ T^2 \end{bmatrix}
\begin{bmatrix} T^3 \\ 0 \\ 0 \\ I \end{bmatrix}
\begin{bmatrix} I \\ 0 \\ 0 \\ T \end{bmatrix}
\begin{bmatrix} 0 \\ 0 \\ I \\ I \end{bmatrix}
\begin{bmatrix} 0 \\ 0 \\ T^2 \\ I \end{bmatrix}
\begin{bmatrix} 0 \\ 0 \\ I \\ T^2 \end{bmatrix}
\begin{bmatrix} 0 \\ I \\ I \\ 0 \end{bmatrix}
\begin{bmatrix} I \\ I \\ 0 \\ 0 \end{bmatrix}
\begin{bmatrix} I \\ T^2 \\ 0 \\ 0 \end{bmatrix}
\begin{bmatrix} T^2 \\ I \\ 0 \\ 0 \end{bmatrix}
$$

$$
\begin{bmatrix} I \\ 0 \\ 0 \\ T^{14} \end{bmatrix}
\begin{bmatrix} 0 \\ 0 \\ T^{14} \\ I \end{bmatrix}
\begin{bmatrix} 0 \\ 0 \\ T^3 \\ I \end{bmatrix}
\begin{bmatrix} 0 \\ 0 \\ T \\ I \end{bmatrix}
\begin{bmatrix} I \\ 0 \\ I \\ 0 \end{bmatrix}
\begin{bmatrix} T^{14} \\ 0 \\ I \\ 0 \end{bmatrix}
\begin{bmatrix} I \\ 0 \\ T^{14} \\ 0 \end{bmatrix}
\begin{bmatrix} T^2 \\ 0 \\ I \\ 0 \end{bmatrix}
\begin{bmatrix} I \\ 0 \\ T^2 \\ 0 \end{bmatrix}
\begin{bmatrix} I \\ T^{14} \\ 0 \\ 0 \end{bmatrix}
\begin{bmatrix} I \\ T \\ 0 \\ 0 \end{bmatrix}
\begin{bmatrix} 0 \\ I \\ 0 \\ I \end{bmatrix}
$$

$$
\begin{bmatrix} 0 \\ T^{14} \\ 0 \\ I \end{bmatrix}
\begin{bmatrix} 0 \\ I \\ 0 \\ T^2 \end{bmatrix}
\begin{bmatrix} 0 \\ T^2 \\ 0 \\ I \end{bmatrix}
\begin{bmatrix} 0 \\ T \\ 0 \\ I \end{bmatrix}
\begin{bmatrix} 0 \\ I \\ T^2 \\ 0 \end{bmatrix}
\begin{bmatrix} 0 \\ T^2 \\ I \\ 0 \end{bmatrix}
\begin{bmatrix} 0 \\ T^{14} \\ I \\ 0 \end{bmatrix}
\begin{bmatrix} 0 \\ I \\ T^{14} \\ 0 \end{bmatrix}
\begin{bmatrix} I \\ 0 \\ 0 \\ 0 \end{bmatrix}
\begin{bmatrix} 0 \\ I \\ 0 \\ 0 \end{bmatrix}
\begin{bmatrix} 0 \\ 0 \\ I \\ 0 \end{bmatrix}
\begin{bmatrix} 0 \\ 0 \\ 0 \\ I \end{bmatrix}
$$

wherein "T" is a companion matrix of 4x4 bits corresponding to a primitive polynomial $1+x+x^4$ in $GF(2^4)$, "0" is an all-zeros matrix of 4x4 bits, and "I" is an identity matrix of 4x4 bits.

4. The error correction device (115) of claim 3, wherein each code word (CWi,CWr) has the symbols, of the included check word (KWi,KWr,KWc) in positions within the code word corresponding to the vectors of the parity matrix (H), composed by three all-zeros matrices and one identity matrix.

5. The error correction device (115) of claim 4, wherein the parity matrix (H) is:

$$
H = \begin{bmatrix}
I & T^2 & I & T^3 & I & 0 & 0 & 0 & 0 & I & I & T^2 & I & 0 & 0 & 0 & I & T^{14} \\
0 & 0 & 0 & 0 & 0 & 0 & 0 & 0 & I & I & T^2 & I & 0 & 0 & 0 & 0 & 0 \\
0 & 0 & 0 & 0 & 0 & I & T^2 & I & I & 0 & 0 & 0 & 0 & T^{14} & T^3 & T & I & I \\
I & I & T^2 & I & T & I & I & T^2 & 0 & 0 & 0 & 0 & T^{14} & I & I & I & 0 & 0 \\
I & T^2 & I & I & I & 0 & 0 & 0 & 0 & 0 & 0 & 0 & 0 & 0 & I & 0 & 0 & 0 \\
0 & 0 & 0 & T^{14} & T & I & T^{14} & I & T^2 & T & I & T^2 & T^{14} & I & 0 & I & 0 & 0 \\
T^{14} & I & T^2 & 0 & 0 & 0 & 0 & 0 & 0 & 0 & T^2 & I & I & T^{14} & 0 & 0 & I & 0 \\
0 & 0 & 0 & 0 & 0 & I & I & T^2 & I & I & 0 & 0 & 0 & 0 & 0 & 0 & 0 & I
\end{bmatrix}
$$

6. The error correction device (115) of any claim from 2 to 5, wherein the means for generating the check word (KWi) and the means for generating the still further check word (KWc) include a single combinatorial network (405) and means (425) for selectively providing the data word (DWi) or the further data word (DWr) to the combinatorial network.

7. The error correction device (115) of any claim from 2 to 5, wherein the means (405) for generating the check word (KWi) includes a first combinatorial network (405) and the means (410) for generating the still further check word (KWc) includes a second combinatorial network (410) distinct from the first combinatorial network.

8. A memory device (100) including:

a memory matrix (105) of memory cells;
the error correction device (115) of any claim from 2 to 7 for receiving the data word (DWi) from outside the memory device and for providing the further data word (DWr) outside the memory device; and

a read/write circuitry (110) including means for receiving the code word (CWi) from the error correction device and storing said code word onto the memory matrix and means for reading the further code word (CWr) from the memory matrix and providing said further code word to the error correction device.

**9.** The memory device (100) of claim 8, wherein the memory device is a multi-level non-volatile memory device, each memory cell storing a symbol.

**10.** An error correction method including the step of:

generating a check word of 16 bits from a data word of 128 bits according to a parity matrix of 16x144 bits, the check word being capable of providing information about a correctness of the data word,
**characterized in that**
the parity matrix has the structure defined in any claim from 1 to 7.

## Patentansprüche

**1.** Fehlerkorrekturvorrichtung (115), aufweisend:

eine Einrichtung (405) zum Generieren eines Prüfwortes (KW) mit 16 Bit aus einem Datenwort (DW) von 128 Bit gemäß einer Paritätsmatrix (H) von 16x144 Bit, wobei das Prüfwort in der Lage ist, Informationen über eine Korrektheit des Datenwortes zu liefern,
**dadurch gekennzeichnet,**
**dass** die Paritätsmatrix aus irgendeiner Permutation der folgenden 144 Vektoren zu 16 Bit besteht:

$$
\begin{bmatrix}1\\0\\0\\0\\0\\0\\0\\0\\0\\0\\0\\0\\1\\0\\0\\0\end{bmatrix}
\begin{bmatrix}0\\1\\0\\0\\0\\0\\0\\0\\0\\0\\0\\0\\0\\1\\0\\0\end{bmatrix}
\begin{bmatrix}0\\0\\1\\0\\0\\0\\0\\0\\0\\0\\0\\0\\0\\0\\1\\0\end{bmatrix}
\begin{bmatrix}0\\0\\0\\1\\0\\0\\0\\0\\0\\0\\0\\0\\0\\0\\0\\1\end{bmatrix}
\begin{bmatrix}0\\0\\1\\0\\0\\0\\0\\0\\0\\0\\0\\0\\1\\0\\0\\0\end{bmatrix}
\begin{bmatrix}0\\0\\0\\1\\0\\0\\0\\0\\0\\0\\0\\0\\0\\1\\0\\0\end{bmatrix}
\begin{bmatrix}1\\1\\0\\0\\0\\0\\0\\0\\0\\0\\0\\0\\0\\0\\1\\0\end{bmatrix}
\begin{bmatrix}0\\1\\1\\0\\0\\0\\0\\0\\0\\0\\0\\0\\0\\0\\0\\1\end{bmatrix}
\begin{bmatrix}1\\0\\0\\0\\0\\0\\0\\0\\0\\0\\0\\0\\0\\0\\1\\0\end{bmatrix}
\begin{bmatrix}0\\1\\0\\0\\0\\0\\0\\0\\0\\0\\0\\0\\0\\0\\0\\1\end{bmatrix}
\begin{bmatrix}0\\0\\1\\0\\0\\0\\0\\0\\0\\0\\0\\0\\1\\1\\0\\0\end{bmatrix}
\begin{bmatrix}0\\0\\0\\1\\0\\0\\0\\0\\0\\0\\0\\0\\0\\1\\1\\0\end{bmatrix}
\begin{bmatrix}0\\0\\0\\1\\0\\0\\0\\0\\0\\0\\0\\0\\1\\0\\0\\0\end{bmatrix}
\begin{bmatrix}1\\1\\0\\0\\0\\0\\0\\0\\0\\0\\0\\0\\0\\1\\0\\0\end{bmatrix}
\begin{bmatrix}0\\1\\1\\0\\0\\0\\0\\0\\0\\0\\0\\0\\0\\0\\1\\0\end{bmatrix}
\begin{bmatrix}0\\0\\1\\0\\0\\0\\0\\0\\0\\0\\0\\0\\0\\0\\0\\1\end{bmatrix}
\begin{bmatrix}1\\0\\0\\0\\0\\0\\0\\0\\0\\0\\0\\0\\0\\1\\0\\0\end{bmatrix}
\begin{bmatrix}0\\1\\0\\0\\0\\0\\0\\0\\0\\0\\0\\0\\0\\0\\1\\0\end{bmatrix}
\begin{bmatrix}0\\0\\1\\0\\0\\0\\0\\0\\0\\0\\0\\0\\0\\0\\0\\1\end{bmatrix}
\begin{bmatrix}0\\0\\0\\1\\0\\0\\0\\0\\0\\0\\0\\0\\1\\1\\0\\0\end{bmatrix}
$$

$$
\begin{bmatrix}0\\0\\0\\0\\0\\0\\0\\0\\0\\1\\0\\0\\0\\1\\0\\0\\0\end{bmatrix}
\begin{bmatrix}0\\0\\0\\0\\0\\0\\0\\0\\0\\0\\1\\0\\0\\0\\1\\0\\0\end{bmatrix}
\begin{bmatrix}0\\0\\0\\0\\0\\0\\0\\0\\0\\0\\0\\1\\0\\0\\0\\1\\0\end{bmatrix}
\begin{bmatrix}0\\0\\0\\0\\0\\0\\0\\0\\0\\0\\0\\0\\1\\0\\0\\0\\1\end{bmatrix}
\begin{bmatrix}0\\0\\0\\0\\0\\0\\0\\0\\0\\0\\0\\1\\0\\1\\0\\0\\0\end{bmatrix}
\begin{bmatrix}0\\0\\0\\0\\0\\0\\0\\0\\0\\0\\0\\1\\0\\0\\1\\0\end{bmatrix}
\begin{bmatrix}0\\0\\0\\0\\0\\0\\0\\0\\1\\1\\0\\0\\0\\0\\1\\0\end{bmatrix}
\begin{bmatrix}0\\0\\0\\0\\0\\0\\0\\0\\0\\1\\1\\0\\0\\0\\0\\1\end{bmatrix}
\begin{bmatrix}0\\0\\0\\0\\0\\0\\0\\0\\1\\0\\0\\0\\0\\0\\1\\0\end{bmatrix}
\begin{bmatrix}0\\0\\0\\0\\0\\0\\0\\0\\0\\1\\0\\0\\0\\0\\0\\1\end{bmatrix}
$$

$$
\begin{bmatrix}0\\0\\0\\0\\0\\0\\0\\0\\0\\0\\1\\1\\0\\1\\1\\0\\0\end{bmatrix}
\begin{bmatrix}0\\0\\0\\0\\0\\0\\0\\0\\0\\0\\0\\1\\1\\0\\1\\0\end{bmatrix}
\begin{bmatrix}0\\0\\0\\0\\1\\1\\0\\0\\1\\0\\0\\0\\0\\0\\0\\0\end{bmatrix}
\begin{bmatrix}0\\0\\0\\0\\0\\0\\1\\0\\0\\1\\0\\1\\0\\0\\0\\0\end{bmatrix}
\begin{bmatrix}0\\0\\0\\0\\0\\1\\0\\1\\0\\0\\1\\0\\1\\0\\0\\0\end{bmatrix}
\begin{bmatrix}1\\0\\0\\0\\1\\1\\1\\0\\0\\1\\0\\1\\0\\0\\0\\0\end{bmatrix}
\begin{bmatrix}0\\1\\0\\0\\0\\0\\0\\0\\0\\0\\0\\0\\0\\0\\0\\0\end{bmatrix}
\begin{bmatrix}0\\0\\1\\0\\0\\0\\0\\1\\0\\0\\0\\0\\0\\0\\0\\0\end{bmatrix}
\begin{bmatrix}0\\0\\1\\0\\0\\0\\0\\0\\0\\0\\0\\0\\0\\0\\0\\0\end{bmatrix}
\begin{bmatrix}0\\0\\0\\1\\0\\0\\0\\0\\1\\0\\0\\0\\0\\0\\0\\0\end{bmatrix}
$$

$$
\begin{bmatrix}1\\0\\0\\0\\0\\1\\0\\0\\0\\0\\0\\0\\0\\0\\0\end{bmatrix}
\begin{bmatrix}0\\1\\0\\0\\0\\0\\1\\0\\0\\0\\0\\0\\0\\0\\0\end{bmatrix}
\begin{bmatrix}0\\0\\1\\0\\1\\1\\0\\0\\0\\0\\0\\0\\0\\0\\0\end{bmatrix}
\begin{bmatrix}0\\0\\0\\1\\0\\1\\1\\0\\0\\0\\0\\0\\0\\0\\0\end{bmatrix}
\begin{bmatrix}0\\0\\1\\0\\1\\0\\0\\0\\0\\0\\0\\0\\0\\0\\0\end{bmatrix}
\begin{bmatrix}0\\0\\0\\1\\0\\1\\0\\0\\0\\0\\0\\0\\0\\0\\0\end{bmatrix}
\begin{bmatrix}1\\1\\0\\0\\0\\0\\1\\0\\0\\0\\0\\0\\0\\0\\0\end{bmatrix}
\begin{bmatrix}0\\1\\1\\0\\0\\0\\0\\1\\0\\0\\0\\0\\0\\0\\0\end{bmatrix}
\begin{bmatrix}1\\0\\0\\0\\0\\0\\0\\0\\0\\0\\0\\1\\0\\0\\1\end{bmatrix}
\begin{bmatrix}0\\1\\0\\0\\0\\0\\0\\0\\0\\0\\1\\0\\1\\0\\0\end{bmatrix}
$$

$$
\begin{bmatrix}0\\0\\1\\0\\0\\0\\0\\0\\0\\0\\0\\0\\0\\1\\0\end{bmatrix}
\begin{bmatrix}0\\0\\0\\1\\0\\0\\0\\0\\0\\0\\1\\0\\1\\0\\0\end{bmatrix}
\begin{bmatrix}0\\0\\0\\0\\0\\0\\0\\1\\1\\0\\0\\0\\0\\0\\0\end{bmatrix}
\begin{bmatrix}0\\0\\0\\0\\0\\0\\0\\0\\1\\0\\1\\0\\0\\1\\0\end{bmatrix}
\begin{bmatrix}0\\0\\0\\0\\0\\0\\0\\0\\0\\1\\0\\1\\0\\0\\1\end{bmatrix}
\begin{bmatrix}0\\0\\0\\0\\0\\0\\0\\0\\1\\1\\0\\0\\1\\0\\0\end{bmatrix}
\begin{bmatrix}0\\0\\0\\0\\0\\0\\0\\1\\1\\0\\0\\1\\0\\0\\1\end{bmatrix}
\begin{bmatrix}0\\0\\0\\0\\0\\0\\0\\0\\0\\1\\1\\0\\1\\1\\0\end{bmatrix}
\begin{bmatrix}0\\0\\0\\0\\0\\0\\0\\1\\1\\0\\0\\1\\0\\0\\1\end{bmatrix}
\begin{bmatrix}0\\0\\0\\0\\0\\0\\0\\0\\1\\1\\0\\0\\1\\0\\1\end{bmatrix}
$$

$$
\begin{bmatrix}0\\0\\0\\0\\0\\0\\0\\0\\0\\1\\0\\0\\1\\0\\0\\0\end{bmatrix}
\begin{bmatrix}0\\0\\0\\0\\0\\0\\0\\0\\0\\0\\1\\0\\0\\1\\0\\0\end{bmatrix}
\begin{bmatrix}0\\0\\0\\0\\0\\0\\0\\0\\0\\0\\0\\1\\0\\0\\1\\0\end{bmatrix}
\begin{bmatrix}0\\0\\0\\0\\0\\0\\0\\0\\1\\1\\0\\0\\0\\0\\0\\1\end{bmatrix}
\begin{bmatrix}1\\0\\0\\0\\0\\0\\0\\0\\1\\0\\0\\0\\0\\0\\0\\0\end{bmatrix}
\begin{bmatrix}0\\0\\1\\0\\0\\0\\0\\0\\0\\1\\0\\0\\0\\0\\0\\0\end{bmatrix}
\begin{bmatrix}0\\1\\0\\0\\0\\0\\0\\0\\0\\0\\1\\0\\0\\0\\0\\0\end{bmatrix}
\begin{bmatrix}0\\0\\1\\0\\0\\0\\0\\0\\0\\0\\0\\1\\0\\0\\0\\0\end{bmatrix}
\begin{bmatrix}1\\0\\0\\1\\0\\0\\0\\0\\1\\0\\0\\0\\1\\0\\0\\0\end{bmatrix}
\begin{bmatrix}1\\0\\0\\1\\0\\0\\0\\0\\0\\1\\0\\0\\0\\0\\0\\0\end{bmatrix}
$$

$$
\begin{bmatrix}0\\1\\0\\0\\0\\0\\0\\0\\0\\0\\1\\0\\0\\0\\0\\0\end{bmatrix}
\begin{bmatrix}0\\0\\1\\0\\0\\0\\0\\0\\0\\0\\0\\1\\1\\0\\0\\0\end{bmatrix}
\begin{bmatrix}1\\0\\1\\0\\0\\0\\0\\0\\1\\0\\0\\1\\0\\0\\0\\0\end{bmatrix}
\begin{bmatrix}0\\0\\0\\0\\0\\0\\0\\0\\1\\1\\0\\0\\0\\0\\0\\0\end{bmatrix}
\begin{bmatrix}0\\1\\0\\0\\0\\0\\0\\0\\0\\1\\1\\0\\0\\0\\0\\0\end{bmatrix}
\begin{bmatrix}0\\0\\1\\0\\0\\0\\0\\0\\0\\0\\1\\0\\0\\0\\0\\0\end{bmatrix}
\begin{bmatrix}0\\0\\0\\1\\0\\0\\0\\0\\1\\0\\0\\0\\0\\0\\0\\0\end{bmatrix}
\begin{bmatrix}0\\0\\1\\0\\0\\0\\0\\0\\0\\0\\0\\0\\0\\0\\0\\0\end{bmatrix}
\begin{bmatrix}1\\1\\0\\0\\0\\0\\0\\0\\0\\0\\1\\0\\0\\0\\0\\0\end{bmatrix}
\begin{bmatrix}0\\1\\1\\0\\0\\0\\0\\0\\0\\0\\0\\1\\0\\0\\0\\0\end{bmatrix}
$$

$$
\begin{bmatrix}1\\0\\0\\0\\0\\0\\0\\0\\0\\0\\1\\0\\0\\0\\0\\0\\0\end{bmatrix}
\begin{bmatrix}0\\1\\0\\0\\0\\0\\0\\0\\0\\0\\0\\1\\0\\0\\0\\0\\0\end{bmatrix}
\begin{bmatrix}0\\0\\1\\0\\0\\0\\0\\0\\0\\1\\1\\0\\0\\0\\0\\0\\0\end{bmatrix}
\begin{bmatrix}0\\0\\0\\1\\0\\0\\0\\0\\0\\1\\0\\1\\0\\0\\0\\0\\0\end{bmatrix}
\begin{bmatrix}1\\0\\0\\0\\1\\0\\0\\1\\0\\0\\0\\0\\0\\0\\0\\0\\0\end{bmatrix}
\begin{bmatrix}0\\1\\0\\0\\0\\1\\0\\0\\0\\0\\0\\0\\0\\0\\0\\0\\0\end{bmatrix}
\begin{bmatrix}0\\0\\1\\0\\1\\0\\1\\0\\0\\0\\0\\0\\0\\0\\0\\0\\0\end{bmatrix}
\begin{bmatrix}0\\0\\0\\1\\0\\1\\0\\1\\0\\0\\0\\0\\0\\0\\0\\0\\0\end{bmatrix}
\begin{bmatrix}1\\0\\0\\0\\0\\0\\1\\0\\1\\0\\0\\0\\0\\0\\0\\0\\0\end{bmatrix}
\begin{bmatrix}0\\1\\0\\0\\0\\0\\0\\1\\0\\1\\0\\0\\0\\0\\0\\0\\0\end{bmatrix}
$$

$$
\begin{bmatrix}0\\0\\1\\0\\0\\0\\1\\0\\0\\0\\1\\0\\0\\0\\0\\0\\0\end{bmatrix}
\begin{bmatrix}0\\0\\0\\1\\0\\0\\0\\1\\0\\0\\0\\0\\0\\0\\0\\0\\0\end{bmatrix}
\begin{bmatrix}0\\0\\0\\0\\1\\1\\0\\0\\0\\0\\0\\0\\0\\0\\0\\1\\0\end{bmatrix}
\begin{bmatrix}0\\0\\0\\0\\1\\0\\1\\0\\0\\0\\0\\0\\0\\0\\1\\0\\1\end{bmatrix}
\begin{bmatrix}0\\0\\0\\0\\0\\1\\0\\1\\1\\0\\0\\0\\0\\1\\0\\0\\0\end{bmatrix}
\begin{bmatrix}0\\0\\0\\0\\0\\0\\0\\1\\0\\1\\0\\0\\0\\0\\1\\0\\1\end{bmatrix}
\begin{bmatrix}0\\0\\0\\0\\0\\1\\0\\0\\1\\0\\0\\0\\0\\0\\0\\1\\0\end{bmatrix}
\begin{bmatrix}0\\0\\0\\0\\0\\0\\1\\0\\0\\1\\0\\0\\0\\1\\0\\0\\1\end{bmatrix}
\begin{bmatrix}0\\0\\0\\0\\1\\0\\0\\0\\1\\0\\0\\0\\0\\0\\0\\0\\0\end{bmatrix}
\begin{bmatrix}0\\0\\0\\0\\0\\0\\1\\0\\0\\0\\0\\0\\0\\0\\1\\0\\1\end{bmatrix}
$$

$$
\begin{bmatrix}0\\0\\0\\1\\0\\0\\0\\0\\0\\0\\0\\0\\0\\0\\1\\0\end{bmatrix}
\begin{bmatrix}0\\0\\0\\0\\1\\0\\0\\0\\0\\0\\0\\0\\0\\0\\0\\1\end{bmatrix}
\begin{bmatrix}0\\0\\0\\0\\0\\1\\0\\0\\0\\0\\0\\0\\1\\1\\0\\0\end{bmatrix}
\begin{bmatrix}0\\0\\0\\0\\0\\0\\1\\0\\0\\0\\0\\0\\1\\1\\1\\0\end{bmatrix}
\begin{bmatrix}0\\0\\0\\0\\0\\1\\0\\0\\0\\0\\0\\0\\0\\0\\0\\0\end{bmatrix}
\begin{bmatrix}0\\0\\0\\0\\0\\0\\1\\0\\0\\0\\0\\0\\1\\1\\0\\0\end{bmatrix}
\begin{bmatrix}0\\0\\0\\1\\1\\0\\0\\0\\0\\0\\0\\0\\0\\0\\1\\0\end{bmatrix}
\begin{bmatrix}0\\0\\0\\0\\1\\1\\0\\0\\0\\0\\0\\0\\0\\0\\0\\1\end{bmatrix}
\begin{bmatrix}0\\0\\0\\0\\1\\0\\0\\0\\0\\0\\0\\0\\1\\0\\0\\1\end{bmatrix}
\begin{bmatrix}0\\0\\0\\0\\1\\0\\1\\0\\0\\0\\0\\0\\0\\1\\0\\0\end{bmatrix}
\begin{bmatrix}0\\0\\0\\0\\0\\0\\1\\1\\0\\0\\0\\0\\0\\0\\1\\0\end{bmatrix}
\begin{bmatrix}0\\0\\0\\1\\1\\0\\0\\0\\0\\0\\1\\0\\0\\1\\0\\1\end{bmatrix}
\begin{bmatrix}0\\0\\0\\1\\0\\0\\0\\0\\0\\1\\1\\0\\0\\0\\0\\0\end{bmatrix}
\begin{bmatrix}0\\0\\0\\0\\1\\0\\1\\0\\1\\0\\1\\0\\1\\0\\0\\0\end{bmatrix}
\begin{bmatrix}0\\0\\0\\0\\1\\1\\1\\1\\0\\0\\0\\0\\0\\0\\0\\0\end{bmatrix}
\begin{bmatrix}0\\0\\0\\0\\0\\0\\0\\1\\1\\1\\0\\0\\0\\0\\0\\0\end{bmatrix}
\begin{bmatrix}0\\0\\0\\0\\1\\0\\1\\0\\1\\0\\0\\0\\0\\0\\0\\0\end{bmatrix}
\begin{bmatrix}0\\0\\0\\0\\0\\1\\0\\1\\0\\0\\0\\0\\0\\0\\0\\0\end{bmatrix}
\begin{bmatrix}0\\0\\0\\1\\1\\0\\0\\0\\0\\0\\0\\0\\0\\0\\0\\0\end{bmatrix}
\begin{bmatrix}0\\0\\0\\0\\1\\1\\0\\0\\0\\0\\0\\0\\0\\0\\0\\0\end{bmatrix}
$$

$$
\begin{bmatrix}0\\0\\0\\0\\1\\0\\0\\1\\1\\0\\0\\0\\0\\0\\0\\0\end{bmatrix}
\begin{bmatrix}0\\0\\0\\0\\1\\0\\0\\0\\0\\1\\0\\0\\0\\0\\0\\0\end{bmatrix}
\begin{bmatrix}0\\0\\0\\0\\0\\1\\0\\0\\0\\0\\1\\0\\0\\0\\0\\0\end{bmatrix}
\begin{bmatrix}0\\0\\0\\0\\0\\0\\1\\0\\0\\0\\0\\1\\0\\0\\0\\0\end{bmatrix}
\begin{bmatrix}0\\0\\0\\0\\0\\0\\0\\0\\1\\1\\0\\0\\0\\0\\0\\0\end{bmatrix}
\begin{bmatrix}0\\0\\0\\0\\1\\1\\0\\0\\0\\0\\0\\0\\0\\0\\0\\0\end{bmatrix}
\begin{bmatrix}0\\0\\0\\0\\0\\0\\1\\0\\1\\0\\0\\0\\0\\0\\0\\0\end{bmatrix}
\begin{bmatrix}0\\0\\0\\0\\0\\0\\0\\1\\0\\1\\0\\0\\0\\0\\0\\0\end{bmatrix}
\begin{bmatrix}1\\1\\0\\0\\0\\0\\0\\0\\0\\0\\0\\0\\0\\0\\0\\0\end{bmatrix}
\begin{bmatrix}0\\1\\1\\0\\0\\0\\0\\0\\0\\0\\0\\0\\0\\0\\0\\0\end{bmatrix}
\begin{bmatrix}0\\0\\1\\1\\0\\0\\0\\0\\0\\0\\0\\0\\0\\0\\0\\0\end{bmatrix}
\begin{bmatrix}0\\0\\0\\1\\1\\0\\0\\0\\0\\0\\0\\0\\0\\0\\0\\0\end{bmatrix}
\begin{bmatrix}0\\0\\0\\0\\1\\1\\0\\0\\0\\0\\0\\0\\0\\0\\0\\0\end{bmatrix}
\begin{bmatrix}0\\0\\0\\0\\0\\0\\1\\1\\0\\0\\0\\0\\0\\0\\0\\0\end{bmatrix}
\begin{bmatrix}0\\0\\0\\0\\0\\1\\1\\0\\0\\0\\0\\0\\0\\0\\0\\0\end{bmatrix}
\begin{bmatrix}0\\0\\0\\0\\0\\0\\0\\1\\1\\0\\0\\0\\0\\0\\0\\0\end{bmatrix}
\begin{bmatrix}0\\0\\0\\0\\0\\0\\0\\0\\0\\1\\1\\0\\0\\0\\0\\0\end{bmatrix}
\begin{bmatrix}0\\0\\0\\0\\0\\0\\0\\0\\0\\0\\1\\1\\0\\0\\0\\0\end{bmatrix}
\begin{bmatrix}0\\0\\0\\0\\0\\0\\0\\0\\0\\0\\0\\1\\1\\0\\0\\0\end{bmatrix}
\begin{bmatrix}0\\0\\0\\0\\0\\0\\0\\0\\0\\0\\0\\0\\1\\1\\0\\0\end{bmatrix}
$$

$$
\begin{bmatrix}0\\0\\0\\0\\0\\0\\0\\0\\0\\0\\0\\0\\0\\0\\1\\0\\0\\0\end{bmatrix}
\begin{bmatrix}0\\0\\0\\0\\0\\0\\0\\0\\0\\0\\0\\0\\0\\0\\0\\1\\0\\0\end{bmatrix}
\begin{bmatrix}0\\0\\0\\0\\0\\0\\0\\0\\0\\0\\0\\0\\0\\0\\0\\0\\1\\0\end{bmatrix}
\begin{bmatrix}0\\0\\0\\0\\0\\0\\0\\0\\0\\0\\0\\0\\0\\0\\0\\0\\0\\1\end{bmatrix}
$$

**2.** Fehlerkorrekturvorrichtung (115) nach Anspruch 1, ferner aufweisend:

eine Einrichtung zum Erzeugen eines Codewortes (CWi) von 144 Bit einschließlich der 128 Bit des Datenwortes (DWi) sowie der 16 Bit des Prüfwortes (KWi);
eine Einrichtung zum Extrahieren eines zusätzlichen weiteren Datenwortes (DWr) mit 128 Bit und eines weiteren Prüfwortes (KWr) mit 16 Bit aus einem weiteren Codewort (CWr) mit 144 Bit;
eine Einrichtung (405; 410) zum Erzeugen eines weiteren Prüfwortes (KWc) mit 16 Bit aus dem weiteren Datenwort gemäß der Paritätsmatrix; und
eine Einrichtung (415, 420) zum Korrigieren des weiteren Datenwortes gemäß einem Vergleich zwischen dem weiteren Prüfwort und dem zusätzlichen weiteren Prüfwort.

**3.** Fehlerkorrekturvorrichtung (115) nach Anspruch 1 oder 2, wobei:

jedes Datenwort (DWr, DWi) aus 32 Symbolen in GF $(2^4)$ besteht, wobei jedes Symbol aus 4 Bit besteht;
jedes Prüfwort (KWi, KWr, KWc) aus vier Symbolen besteht;
jedes Codewort (CWi, CWr) aus 36 Symbolen einschließlich der 32 Symbole des entsprechenden Datenwortes und der vier Symbole des ensprechenden Prüfwortes besteht; und
die Paritätsmatrix (H) aus 4x36 Symbolen besteht, die aus irgendeiner Permutation von den folgenden 36 Vektoren aus vier Symbolen bestehen:

$$\begin{bmatrix}I\\0\\0\\I\end{bmatrix}\begin{bmatrix}T^2\\0\\0\\I\end{bmatrix}\begin{bmatrix}I\\0\\0\\T^2\end{bmatrix}\begin{bmatrix}T^3\\0\\0\\I\end{bmatrix}\begin{bmatrix}I\\0\\0\\T\end{bmatrix}\begin{bmatrix}0\\0\\I\\I\end{bmatrix}\begin{bmatrix}0\\0\\T^2\\I\end{bmatrix}\begin{bmatrix}0\\0\\I\\T^2\end{bmatrix}\begin{bmatrix}0\\I\\I\\T^2\end{bmatrix}\begin{bmatrix}I\\I\\0\\0\end{bmatrix}\begin{bmatrix}I\\T^2\\0\\0\end{bmatrix}\begin{bmatrix}T^2\\I\\0\\0\end{bmatrix}$$

$$\begin{bmatrix}I\\0\\0\\T^{14}\end{bmatrix}\begin{bmatrix}0\\0\\T^{14}\\I\end{bmatrix}\begin{bmatrix}0\\0\\T^3\\I\end{bmatrix}\begin{bmatrix}0\\0\\T\\I\end{bmatrix}\begin{bmatrix}I\\0\\I\\0\end{bmatrix}\begin{bmatrix}T^{14}\\0\\I\\0\end{bmatrix}\begin{bmatrix}I\\0\\T^{14}\\0\end{bmatrix}\begin{bmatrix}T^2\\0\\I\\0\end{bmatrix}\begin{bmatrix}I\\0\\T^2\\0\end{bmatrix}\begin{bmatrix}I\\T^{14}\\0\\0\end{bmatrix}\begin{bmatrix}I\\T\\0\\0\end{bmatrix}\begin{bmatrix}0\\I\\0\\I\end{bmatrix}$$

$$\begin{bmatrix}0\\T^{14}\\0\\I\end{bmatrix}\begin{bmatrix}0\\I\\0\\T^2\end{bmatrix}\begin{bmatrix}0\\T^2\\0\\I\end{bmatrix}\begin{bmatrix}0\\T\\0\\I\end{bmatrix}\begin{bmatrix}0\\I\\T^2\\0\end{bmatrix}\begin{bmatrix}0\\T^2\\I\\0\end{bmatrix}\begin{bmatrix}0\\T^{14}\\I\\0\end{bmatrix}\begin{bmatrix}0\\I\\T^{14}\\0\end{bmatrix}\begin{bmatrix}I\\I\\0\\0\end{bmatrix}\begin{bmatrix}0\\I\\0\\0\end{bmatrix}\begin{bmatrix}0\\0\\I\\0\end{bmatrix}\begin{bmatrix}0\\0\\0\\I\end{bmatrix}$$

wobei "T" eine Begleitmatrix mit 4x4 Bit entsprechend einem primitiven Polynom $1+x+x^4$ in GF$(2^4)$ ist, "0" eine ausschließlich Nullen enthaltende Matrix mit 4x4 Bit und "I" eine Identitätsmatrix mit 4x4 Bit ist.

**4.** Fehlerkorrekturvorrichtung (115) nach Anspruch 3, wobei jedes Codewort (CWi, CWr) die Symbole des eingeschlossenen Prüfwortes (KWi, KWr, KWc) an Positionen innerhalb des Codeworts entsprechend den Vektoren der Paritätsmatrix (H) aufweist, zusammengefügt durch drei ausschließlich Nullen enthaltende Matrizen und eine Identitätsmatrix.

**5.** Fehlerkorrekturvorrichtung (115) nach Anspruch 4, wobei die Paritätsmatrix (H) wie folgt lautet:

$$H = \begin{bmatrix}
I & T^2 & I & T^3 & I & 0 & 0 & 0 & 0 & I & I & T^3 & I & 0 & 0 & 0 & I & T^{14} \\
0 & 0 & 0 & 0 & 0 & 0 & 0 & 0 & I & I & T^2 & I & 0 & 0 & 0 & 0 & 0 & 0 \\
0 & 0 & 0 & 0 & 0 & I & T^2 & I & I & 0 & 0 & 0 & 0 & T^{14} & T^3 & T & I & I \\
I & I & T^2 & I & T & I & I & T^2 & 0 & 0 & 0 & 0 & T^{14} & I & I & I & 0 & 0
\end{bmatrix}$$

$$\begin{bmatrix}
I & T^2 & I & I & I & 0 & 0 & 0 & 0 & 0 & 0 & 0 & 0 & 0 & I & 0 & 0 & 0 \\
0 & 0 & 0 & T^{14} & T & I & T^{14} & I & T^2 & T & I & T^2 & T^{14} & I & 0 & I & 0 & 0 \\
T^{14} & I & T^2 & 0 & 0 & 0 & 0 & 0 & 0 & 0 & T^2 & I & I & T^{14} & 0 & 0 & I & 0 \\
0 & 0 & 0 & 0 & 0 & I & I & T^2 & I & I & 0 & 0 & 0 & 0 & 0 & 0 & 0 & I
\end{bmatrix}$$

**6.** Fehlerkorrekturvorrichtung (115) nach irgendeinem der Ansprüche 2 bis 5, wobei die Einrichtung zum Erzeugen des Prüfwortes (KWi) und die Einrichtung zum Erzeugen des zusätzlichen weiteren Prüfwortes (KWc) ein einzelnes kombinatorisches Netzwerk (405) sowie eine Einrichtung (425) zum selektiven Liefern des Datenwortes (DWi) oder des weiteren Datenwortes (DWr) an das kombinatorische Netzwerk beinhaltet.

**7.** Fehlerkorrekturvorrichtung (115) nach irgendeinem der Ansprüche 2 bis 5, wobei die Einrichtung (405) zum Erzeugen des Prüfwortes (KWi) ein erstes kombinatorisches Netzwerk (405) umfasst, und wobei die Einrichtung (410) zum Erzeugen des zusätzlichen weiteren Prüfwortes (KWc) ein zweites kombinatorisches Netzwerk (410) umfasst, das gegenüber dem ersten kombinatorischen Netzwerk unterschieden ist.

**8.** Speichervorrichtung (100), aufweisend:

eine Speichermatrix (105) aus Speicherzellen;
die Fehlerkorrekturvorrichtung (115) gemäß irgendeinem der Ansprüche von 2 bis 7 zum Entgegennehmen des Datenwortes (DWi) von außerhalb der Speichervorrichtung und zum Liefern des weiteren Datenwortes (DWr) außerhalb der Speichervorrichtung; und
eine Lese-/Schreib-Schaltung (110) einschließlich einer Einrichtung zum Entgegennehmen des Codewortes (CWi) von der Fehlerkorrekturvorrichtung und zum Speichern des Codewortes in der Speichermatrix sowie eine Einrichtung zum Lesen des weiteren Codewortes (CWr) aus der Speichermatrix und zum Liefern des weiteren Codeworts an die Fehlerkorrekturvorrichtung.

**9.** Speichervorrichtung (100) nach Anspruch 8, wobei die Speichervorrichtung eine nichtflüchtige Mehrpegel-Speichervorrichtung ist, wobei jede Speicherzelle ein Symbol speichert.

**10.** Fehlerkorrekturverfahren, aufweisend folgenden Schritt:

Erzeugen eines Prüfwortes mit 16 Bit aus einem Datenwort mit 128 Bit gemäß einer Paritätsmatrix von 16x144 Bit, wobei das Prüfwort in der Lage ist, Information über eine Korrektheit des Datenwortes zu liefern,
**dadurch gekennzeichnet,**
**dass** die Paritätsmatrix die Struktur aufweist, die in irgendeinem der Ansprüche von 1 bis 7 definiert ist.


**Revendications**

**1.** Dispositif de correction d'erreur (115) comprenant :

des moyens (405) de génération d'un mot de vérification (KW) de 16 bits à partir d'un mot de données (DW) de 128 bits selon une matrice de parité (H) de 16x144 bits, le mot de vérification étant capable de fournir des informations concernant l'exactitude du mot de données,
**caractérisé en ce que**
la matrice de parité est constituée d'une permutation quelconque des 144 vecteurs de 16 bits suivants :

$$
\begin{bmatrix}1\\0\\0\\0\\0\\0\\0\\0\\0\\0\\0\\0\\0\\0\\0\\0\\1\\0\\0\\0\end{bmatrix}
\begin{bmatrix}0\\1\\0\\0\\0\\0\\0\\0\\0\\0\\0\\0\\0\\0\\0\\0\\0\\1\\0\\0\end{bmatrix}
\begin{bmatrix}0\\0\\1\\0\\0\\0\\0\\0\\0\\0\\0\\0\\0\\0\\0\\0\\0\\0\\1\\0\end{bmatrix}
\begin{bmatrix}0\\0\\0\\1\\0\\0\\0\\0\\0\\0\\0\\0\\0\\0\\0\\0\\0\\0\\0\\1\end{bmatrix}
\begin{bmatrix}0\\0\\1\\0\\0\\0\\0\\0\\0\\0\\0\\0\\0\\0\\0\\0\\1\\0\\0\\0\end{bmatrix}
\begin{bmatrix}0\\0\\0\\1\\0\\0\\0\\0\\0\\0\\0\\0\\0\\0\\0\\0\\0\\1\\0\\0\end{bmatrix}
\begin{bmatrix}1\\1\\0\\0\\0\\0\\0\\0\\0\\0\\0\\0\\0\\0\\0\\0\\0\\0\\1\\0\end{bmatrix}
\begin{bmatrix}0\\1\\1\\0\\0\\0\\0\\0\\0\\0\\0\\0\\0\\0\\0\\0\\0\\0\\0\\1\end{bmatrix}
\begin{bmatrix}1\\0\\0\\0\\0\\0\\0\\0\\0\\0\\0\\0\\0\\0\\0\\0\\0\\0\\1\\0\end{bmatrix}
\begin{bmatrix}0\\1\\0\\0\\0\\0\\0\\0\\0\\0\\0\\0\\0\\0\\0\\0\\0\\0\\0\\1\end{bmatrix}
$$

$$
\begin{bmatrix}0\\0\\1\\0\\0\\0\\0\\0\\0\\0\\0\\0\\0\\0\\0\\0\\1\\1\\0\\0\end{bmatrix}
\begin{bmatrix}0\\0\\0\\1\\0\\0\\0\\0\\0\\0\\0\\0\\0\\0\\0\\0\\0\\1\\1\\0\end{bmatrix}
\begin{bmatrix}0\\0\\0\\1\\0\\0\\0\\0\\0\\0\\0\\0\\0\\0\\0\\0\\1\\0\\0\\0\end{bmatrix}
\begin{bmatrix}1\\1\\0\\0\\0\\0\\0\\0\\0\\0\\0\\0\\0\\0\\0\\0\\0\\1\\0\\0\end{bmatrix}
\begin{bmatrix}0\\1\\1\\0\\0\\0\\0\\0\\0\\0\\0\\0\\0\\0\\0\\0\\0\\0\\1\\1\end{bmatrix}
\begin{bmatrix}0\\0\\1\\1\\0\\0\\0\\0\\0\\0\\0\\0\\0\\0\\0\\0\\0\\0\\0\\0\end{bmatrix}
\begin{bmatrix}1\\0\\0\\0\\0\\0\\0\\0\\0\\0\\0\\0\\0\\0\\0\\0\\0\\1\\0\\0\end{bmatrix}
\begin{bmatrix}0\\1\\0\\0\\0\\0\\0\\0\\0\\0\\0\\0\\0\\0\\0\\0\\0\\0\\1\\0\end{bmatrix}
\begin{bmatrix}0\\0\\1\\0\\0\\0\\0\\0\\0\\0\\0\\0\\0\\0\\0\\0\\0\\0\\0\\1\end{bmatrix}
\begin{bmatrix}0\\0\\0\\1\\0\\0\\0\\0\\0\\0\\0\\0\\0\\0\\0\\0\\1\\1\\0\\0\end{bmatrix}
$$

$$
\begin{bmatrix} 0\\0\\0\\0\\0\\0\\0\\0\\1\\0\\0\\0\\1\\0\\0\\1\\0\\0\\0 \end{bmatrix}
\begin{bmatrix} 0\\0\\0\\0\\0\\0\\0\\0\\0\\1\\0\\0\\0\\1\\0\\1\\0\\0 \end{bmatrix}
\begin{bmatrix} 0\\0\\0\\0\\0\\0\\0\\0\\0\\0\\1\\0\\0\\0\\1\\0\\0\\1\\0 \end{bmatrix}
\begin{bmatrix} 0\\0\\0\\0\\0\\0\\0\\0\\0\\0\\0\\1\\0\\0\\0\\0\\0\\0\\1 \end{bmatrix}
\begin{bmatrix} 0\\0\\0\\0\\0\\0\\0\\0\\0\\0\\1\\0\\1\\0\\0\\0\\0\\0 \end{bmatrix}
\begin{bmatrix} 0\\0\\0\\0\\0\\0\\0\\0\\0\\0\\0\\1\\0\\1\\0\\1\\0\\0\\0 \end{bmatrix}
\begin{bmatrix} 0\\0\\0\\0\\0\\0\\0\\0\\1\\1\\0\\0\\0\\0\\1\\0\\0\\1\\0 \end{bmatrix}
\begin{bmatrix} 0\\0\\0\\0\\0\\0\\0\\0\\0\\1\\1\\0\\0\\0\\0\\0\\0\\0\\1 \end{bmatrix}
\begin{bmatrix} 0\\0\\0\\0\\0\\0\\0\\0\\1\\0\\0\\0\\0\\0\\1\\0\\0\\1\\0 \end{bmatrix}
\begin{bmatrix} 0\\0\\0\\0\\0\\0\\0\\0\\0\\1\\0\\0\\0\\0\\0\\0\\0\\0\\0 \end{bmatrix}
\begin{bmatrix} 0\\0\\0\\0\\0\\0\\0\\0\\0\\0\\1\\0\\1\\1\\1\\0\\0\\0 \end{bmatrix}
\begin{bmatrix} 0\\0\\0\\0\\0\\0\\0\\0\\0\\0\\0\\1\\0\\1\\1\\0\\1\\0 \end{bmatrix}
\begin{bmatrix} 0\\0\\0\\1\\0\\0\\0\\0\\1\\1\\0\\0\\0\\0\\0\\0\\0\\0 \end{bmatrix}
\begin{bmatrix} 0\\0\\0\\0\\1\\0\\0\\0\\0\\1\\1\\1\\0\\0\\0\\0\\0\\0 \end{bmatrix}
\begin{bmatrix} 0\\0\\0\\0\\0\\1\\0\\0\\0\\0\\1\\1\\0\\0\\0\\0\\0\\0 \end{bmatrix}
\begin{bmatrix} 0\\0\\0\\0\\0\\0\\1\\1\\0\\0\\0\\0\\0\\0\\0\\0\\0\\0 \end{bmatrix}
\begin{bmatrix} 1\\0\\0\\1\\1\\1\\0\\0\\0\\0\\0\\0\\0\\0\\0\\0\\0\\0 \end{bmatrix}
\begin{bmatrix} 0\\1\\0\\0\\0\\0\\1\\1\\0\\0\\0\\0\\0\\0\\0\\0\\0\\0 \end{bmatrix}
\begin{bmatrix} 0\\0\\1\\0\\0\\0\\1\\0\\0\\0\\0\\0\\0\\0\\0\\0\\0\\0 \end{bmatrix}
\begin{bmatrix} 0\\0\\0\\1\\0\\0\\0\\1\\0\\0\\0\\0\\0\\0\\0\\0\\0\\0 \end{bmatrix}
$$

$$
\begin{bmatrix} 1\\0\\0\\0\\0\\0\\1\\0\\0\\0\\0\\0\\0\\0\\0\\0\\0\\0 \end{bmatrix}
\begin{bmatrix} 0\\1\\0\\0\\0\\0\\0\\1\\0\\0\\0\\0\\0\\0\\0\\0\\0\\0 \end{bmatrix}
\begin{bmatrix} 0\\0\\1\\0\\1\\1\\1\\0\\0\\0\\0\\0\\0\\0\\0\\0\\0\\0 \end{bmatrix}
\begin{bmatrix} 0\\0\\0\\1\\0\\1\\1\\0\\0\\0\\0\\0\\0\\0\\0\\0\\0\\0 \end{bmatrix}
\begin{bmatrix} 0\\0\\1\\0\\1\\0\\0\\0\\0\\0\\0\\0\\0\\0\\0\\0\\0\\0 \end{bmatrix}
\begin{bmatrix} 0\\0\\0\\1\\0\\1\\0\\0\\0\\0\\0\\0\\0\\0\\0\\0\\0\\0 \end{bmatrix}
\begin{bmatrix} 1\\1\\0\\0\\0\\0\\1\\0\\0\\0\\0\\0\\0\\0\\0\\0\\0\\0 \end{bmatrix}
\begin{bmatrix} 0\\1\\1\\0\\0\\0\\0\\1\\0\\0\\0\\0\\0\\0\\0\\0\\0\\0 \end{bmatrix}
\begin{bmatrix} 1\\0\\0\\0\\0\\0\\0\\0\\0\\0\\0\\0\\0\\1\\0\\0\\0 \end{bmatrix}
\begin{bmatrix} 0\\1\\0\\0\\0\\0\\0\\0\\0\\0\\0\\0\\0\\0\\0\\0\\0\\1 \end{bmatrix}
\begin{bmatrix} 0\\0\\1\\0\\0\\0\\0\\0\\0\\0\\0\\0\\0\\0\\0\\0\\1\\0 \end{bmatrix}
\begin{bmatrix} 0\\0\\0\\1\\0\\0\\0\\0\\0\\0\\0\\0\\0\\0\\0\\0\\0\\1 \end{bmatrix}
\begin{bmatrix} 0\\0\\0\\0\\0\\0\\0\\0\\1\\0\\0\\1\\0\\0\\0\\1\\0 \end{bmatrix}
\begin{bmatrix} 0\\0\\0\\0\\0\\0\\0\\0\\1\\0\\0\\0\\0\\0\\1\\0\\0 \end{bmatrix}
\begin{bmatrix} 0\\0\\0\\0\\0\\0\\0\\0\\0\\1\\0\\0\\1\\0\\0\\1\\0 \end{bmatrix}
\begin{bmatrix} 0\\0\\0\\0\\0\\0\\0\\0\\0\\0\\1\\0\\0\\1\\0\\0\\1 \end{bmatrix}
\begin{bmatrix} 0\\0\\0\\0\\0\\0\\0\\0\\1\\1\\0\\0\\0\\1\\0\\0\\0 \end{bmatrix}
\begin{bmatrix} 0\\0\\0\\0\\0\\0\\0\\0\\0\\1\\1\\0\\0\\0\\1\\1\\0 \end{bmatrix}
\begin{bmatrix} 0\\0\\0\\0\\0\\0\\0\\0\\1\\1\\0\\0\\0\\1\\0\\1\\0 \end{bmatrix}
\begin{bmatrix} 0\\0\\0\\0\\0\\0\\0\\0\\0\\0\\1\\1\\1\\0\\0\\0\\1 \end{bmatrix}
$$

$$
\begin{array}{cccccccccccccccccccc}
0&0&0&0&1&0&0&0&1&1&0&0&1&0&0&0&0&0&1&0\\
0&0&0&0&0&1&0&0&0&0&1&0&0&1&0&0&0&0&1&1\\
0&0&0&0&0&0&1&0&0&0&0&1&0&0&1&0&1&0&0&1\\
0&0&0&0&0&0&0&1&1&0&0&0&0&0&0&1&0&1&0&0\\
0&0&0&0&0&0&0&0&0&0&0&0&0&0&0&0&0&0&0&0\\
0&0&0&0&0&0&0&0&0&0&0&0&0&0&0&0&0&0&0&0\\
0&0&0&0&0&0&0&0&0&0&0&0&0&0&0&0&0&0&0&0\\
0&0&0&0&0&0&0&0&0&0&0&0&0&0&0&0&0&0&0&0\\
0&0&0&1&1&0&0&0&1&0&0&0&1&1&0&0&1&0&0&0\\
1&0&0&1&0&1&0&0&0&1&0&0&0&0&1&0&0&1&0&0\\
0&1&0&0&0&0&1&0&0&0&1&0&0&0&0&1&0&0&1&0\\
0&0&1&0&0&0&0&1&0&0&0&1&1&0&0&0&0&0&0&1\\
1&0&0&0&0&0&0&0&0&0&0&0&0&0&0&0&0&0&0&0\\
0&1&0&0&0&0&0&0&0&0&0&0&0&0&0&0&0&0&0&0\\
0&0&1&0&0&0&0&0&0&0&0&0&0&0&0&0&0&0&0&0\\
0&0&0&1&0&0&0&0&0&0&0&0&0&0&0&0&0&0&0&0
\end{array}
$$

$$
\begin{array}{cccccccccccccccccccc}
1&0&0&0&1&0&0&0&1&0&0&0&0&0&0&0&0&0&0&0\\
0&1&0&0&0&1&0&0&0&1&0&0&0&0&0&0&0&0&0&0\\
0&0&1&0&0&0&1&0&0&0&1&0&0&0&0&0&0&0&0&0\\
0&0&0&1&0&0&0&1&0&0&0&1&0&0&0&0&0&0&0&0\\
0&0&0&0&1&1&0&0&0&0&0&1&1&0&0&0&1&1&0&0\\
0&0&0&0&0&0&1&0&1&0&0&1&0&1&0&0&0&0&1&0\\
0&0&0&0&0&0&0&1&0&1&0&0&0&0&1&0&0&0&0&1\\
0&0&0&0&1&0&0&0&0&0&1&0&0&0&0&1&1&0&0&0\\
0&0&1&0&0&0&0&0&0&0&0&0&0&0&0&0&0&0&0&0\\
0&0&1&1&0&0&0&0&0&0&0&0&0&0&0&0&0&0&0&0\\
1&0&0&1&0&0&0&0&0&0&0&0&0&0&0&0&0&0&0&0\\
0&1&0&0&0&0&0&0&0&0&0&0&0&0&0&0&0&0&0&0\\
0&0&0&0&0&0&0&0&0&0&0&0&1&0&0&0&1&0&0&0\\
0&0&0&0&0&0&0&0&0&0&0&0&0&1&0&0&0&1&0&0\\
0&0&0&0&0&0&0&0&0&0&0&0&0&0&1&0&0&0&1&0\\
0&0&0&0&0&0&0&0&0&0&0&0&0&0&0&1&0&0&0&1
\end{array}
$$

```
[0] [0] [0] [0] [0] [0] [0] [0] [0] [0] [0] [0] [0] [0] [0] [0] [0] [0] [0] [0]
[0] [0] [0] [0] [0] [0] [0] [0] [0] [0] [0] [0] [0] [0] [0] [0] [0] [0] [0] [0]
[0] [0] [0] [0] [0] [0] [0] [0] [0] [0] [0] [0] [0] [0] [0] [0] [0] [0] [0] [0]
[0] [0] [0] [0] [0] [0] [0] [0] [0] [0] [0] [0] [0] [0] [0] [0] [0] [0] [0] [0]
[1] [0] [0] [0] [0] [0] [1] [0] [0] [0] [0] [1] [1] [0] [0] [0] [0] [0] [1] [0]
[0] [1] [0] [0] [0] [0] [1] [1] [1] [0] [0] [1] [0] [1] [0] [0] [0] [0] [1] [1]
[0] [0] [1] [0] [1] [0] [0] [1] [0] [1] [0] [0] [0] [0] [1] [0] [1] [0] [0] [1]
[0] [0] [0] [1] [0] [1] [0] [0] [0] [0] [1] [0] [0] [0] [0] [1] [0] [1] [0] [0]
[0] [0] [0] [0] [0] [0] [0] [0] [0] [0] [0] [0] [0] [0] [1] [0] [1] [0] [0] [0]
[0] [0] [0] [0] [0] [0] [0] [0] [0] [0] [0] [0] [0] [0] [1] [1] [0] [1] [0] [0]
[0] [0] [0] [0] [0] [0] [0] [0] [0] [0] [0] [0] [1] [0] [0] [1] [0] [0] [1] [0]
[0] [0] [0] [0] [0] [0] [0] [0] [0] [0] [0] [0] [0] [1] [0] [0] [0] [0] [0] [1]
[0] [0] [0] [0] [0] [0] [0] [0] [0] [0] [0] [0] [1] [0] [0] [1] [0] [0] [1] [0]
[0] [0] [0] [0] [0] [0] [0] [0] [0] [0] [0] [0] [0] [1] [0] [0] [0] [0] [0] [1]
[0] [0] [1] [0] [1] [0] [0] [0] [1] [0] [0] [0] [0] [0] [0] [0] [0] [0] [0] [0]
[0] [0] [1] [1] [0] [1] [0] [0] [0] [1] [0] [0] [0] [0] [0] [0] [0] [0] [0] [0]
[1] [0] [0] [1] [0] [0] [1] [0] [0] [0] [1] [0] [0] [0] [0] [0] [0] [0] [0] [0]
[0] [1] [0] [0] [0] [0] [0] [1] [0] [0] [0] [0] [1] [0] [0] [0] [0] [0] [0] [0]
```

```
[0] [0] [0] [0] [0] [0] [0] [0] [1] [0] [0] [0] [0] [0] [0] [0] [0] [0] [0] [0]
[0] [0] [0] [0] [0] [0] [0] [0] [0] [1] [0] [0] [0] [0] [0] [0] [0] [0] [0] [0]
[0] [0] [0] [0] [0] [0] [0] [0] [0] [0] [1] [0] [0] [0] [0] [0] [0] [0] [0] [0]
[0] [0] [0] [0] [0] [0] [0] [0] [0] [0] [0] [1] [0] [0] [0] [0] [0] [0] [0] [0]
[1] [1] [0] [0] [1] [0] [0] [0] [0] [0] [0] [0] [1] [0] [0] [0] [0] [0] [0] [0]
[0] [0] [1] [0] [0] [1] [0] [0] [0] [0] [0] [0] [0] [1] [0] [0] [0] [0] [0] [0]
[0] [0] [0] [1] [0] [0] [1] [0] [0] [0] [0] [0] [0] [0] [1] [0] [0] [0] [0] [0]
[1] [0] [0] [0] [0] [0] [0] [1] [0] [0] [0] [0] [0] [0] [0] [1] [0] [0] [0] [0]
[1] [0] [0] [0] [0] [0] [0] [0] [0] [0] [0] [0] [0] [0] [0] [0] [1] [0] [0] [0]
[0] [1] [0] [0] [1] [1] [0] [0] [0] [0] [0] [0] [0] [0] [0] [0] [0] [1] [0] [0]
[0] [0] [1] [0] [0] [0] [1] [0] [0] [0] [0] [0] [0] [0] [0] [0] [0] [0] [1] [0]
[0] [0] [0] [1] [1] [1] [0] [1] [0] [0] [0] [0] [0] [0] [0] [0] [0] [0] [0] [1]
[0] [1] [0] [0] [0] [0] [1] [0] [0] [0] [0] [0] [0] [0] [0] [0] [1] [0] [0] [0]
[0] [0] [1] [0] [0] [0] [0] [1] [0] [0] [0] [0] [0] [0] [0] [0] [0] [1] [0] [0]
[0] [0] [0] [1] [1] [0] [0] [0] [0] [0] [0] [0] [0] [0] [0] [0] [0] [0] [0] [1]
[0] [0] [0] [0] [0] [0] [0] [0] [0] [0] [0] [0] [0] [0] [0] [0] [0] [0] [0] [0]
[0] [0] [0] [0] [0] [0] [0] [0] [0] [0] [0] [0] [0] [0] [0] [0] [0] [0] [0] [0]
[0] [0] [0] [0] [0] [0] [0] [0] [0] [0] [0] [0] [0] [0] [0] [0] [0] [0] [0] [0]
```

$$
\begin{bmatrix} 0 \\ 0 \\ 0 \\ 0 \\ 0 \\ 0 \\ 0 \\ 0 \\ 0 \\ 0 \\ 0 \\ 0 \\ 1 \\ 0 \\ 0 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 1 \\ 0 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 0 \\ 1 \\ 0 \end{bmatrix}
\begin{bmatrix} 0 \\ 0 \\ 0 \\ 0 \\ 0 \\ 0 \\ 0 \\ 0 \\ 0 \\ 0 \\ 0 \\ 0 \\ 0 \\ 0 \\ 0 \\ 1 \end{bmatrix}
$$

2. Dispositif de correction d'erreur (115) selon la revendication 1, comprenant en outre :

des moyens de génération d'un mot de code (CWi) de 144 bits comprenant les 128 bits du mot de données (DWi) et les 16 bits du mot de vérification (KWi) ;
des moyens d'extraction d'un mot de données supplémentaire (DWr) de 128 bits et d'un mot de vérification supplémentaire (KWr) de 16 bits à partir d'un mot de code supplémentaire (CWr) de 144 bits ;
des moyens (405 ; 410) de génération d'encore un mot de vérification supplémentaire (KWc) de 16 bits à partir du mot de données supplémentaire selon la matrice de parité ; et
des moyens (415, 420) de correction du mot de données supplémentaire selon une comparaison entre le mot de vérification supplémentaire et ledit encore un mot de vérification supplémentaire.

3. Dispositif de correction d'erreur (115) selon la revendication 1 ou 2, dans lequel :

chaque mot de données (DWr, DWi) est constitué de 32 symboles dans GF($2^4$), chaque symbole étant constitué de 4 bits ;
chaque mot de vérification (KWi, KWr, KWc) est constitué de 4 symboles ;
chaque mot de code (CWi, CWr) est constitué de 36 symboles comprenant les 32 symboles du mot de données correspondant et les 4 symboles du mot de vérification correspondant ; et
la matrice de parité (H) est constituée de 4x36 symboles constitués d'une permutation quelconque des 36 vecteurs de 4 symboles suivants :

$$
\begin{bmatrix} I \\ 0 \\ 0 \\ I \end{bmatrix}
\begin{bmatrix} T^2 \\ 0 \\ 0 \\ I \end{bmatrix}
\begin{bmatrix} I \\ 0 \\ 0 \\ T^2 \end{bmatrix}
\begin{bmatrix} T^3 \\ 0 \\ 0 \\ I \end{bmatrix}
\begin{bmatrix} I \\ 0 \\ 0 \\ T \end{bmatrix}
\begin{bmatrix} 0 \\ 0 \\ I \\ I \end{bmatrix}
\begin{bmatrix} 0 \\ 0 \\ T^2 \\ I \end{bmatrix}
\begin{bmatrix} 0 \\ 0 \\ I \\ T^2 \end{bmatrix}
\begin{bmatrix} 0 \\ I \\ I \\ 0 \end{bmatrix}
\begin{bmatrix} I \\ I \\ 0 \\ 0 \end{bmatrix}
\begin{bmatrix} I \\ T^2 \\ 0 \\ 0 \end{bmatrix}
\begin{bmatrix} T^2 \\ I \\ 0 \\ 0 \end{bmatrix}
$$

$$
\begin{bmatrix} I \\ 0 \\ 0 \\ T^{14} \end{bmatrix}
\begin{bmatrix} 0 \\ 0 \\ 0 \\ I \end{bmatrix}
\begin{bmatrix} 0 \\ 0 \\ T^3 \\ I \end{bmatrix}
\begin{bmatrix} 0 \\ 0 \\ T \\ I \end{bmatrix}
\begin{bmatrix} I \\ 0 \\ I \\ 0 \end{bmatrix}
\begin{bmatrix} T^{14} \\ 0 \\ I \\ 0 \end{bmatrix}
\begin{bmatrix} I \\ 0 \\ T^{14} \\ 0 \end{bmatrix}
\begin{bmatrix} T^2 \\ 0 \\ I \\ 0 \end{bmatrix}
\begin{bmatrix} I \\ 0 \\ T^2 \\ 0 \end{bmatrix}
\begin{bmatrix} I \\ T^{14} \\ 0 \\ 0 \end{bmatrix}
\begin{bmatrix} I \\ T \\ 0 \\ 0 \end{bmatrix}
\begin{bmatrix} 0 \\ I \\ 0 \\ I \end{bmatrix}
$$

$$
\begin{bmatrix} 0 \\ T^{14} \\ 0 \\ I \end{bmatrix}
\begin{bmatrix} 0 \\ I \\ 0 \\ T^2 \end{bmatrix}
\begin{bmatrix} 0 \\ T^2 \\ 0 \\ I \end{bmatrix}
\begin{bmatrix} 0 \\ T \\ 0 \\ I \end{bmatrix}
\begin{bmatrix} 0 \\ I \\ T^2 \\ 0 \end{bmatrix}
\begin{bmatrix} 0 \\ T^2 \\ I \\ 0 \end{bmatrix}
\begin{bmatrix} 0 \\ T^{14} \\ I \\ 0 \end{bmatrix}
\begin{bmatrix} 0 \\ I \\ T^{14} \\ 0 \end{bmatrix}
\begin{bmatrix} I \\ 0 \\ 0 \\ 0 \end{bmatrix}
\begin{bmatrix} 0 \\ I \\ 0 \\ 0 \end{bmatrix}
\begin{bmatrix} 0 \\ 0 \\ I \\ 0 \end{bmatrix}
\begin{bmatrix} 0 \\ 0 \\ 0 \\ I \end{bmatrix}
$$

dans lesquels "T" est une matrice compagnon de 4x4 bits correspondant à un polynôme primitif $1+x+x^4$ dans $GF(2^4)$, "0" est une matrice de 4x4 bits entièrement constituée de zéros, et "I" est une matrice identité de 4X4 bits.

**4.** Dispositif de correction d'erreur (115) selon la revendication 3, dans lequel chaque mot de code (CWi, CWr) a les symboles, du mot de vérification inclus (KWi, KWr, KWc) à des positions dans le mot de code correspondant aux vecteurs de la matrice de parité (H), composés de trois matrices entièrement constituées de zéros et d'une matrice identité.

**5.** Dispositif de correction d'erreur (115) selon la revendication 4, dans lequel la matrice de parité (H) est la suivante :

$$
H = \begin{bmatrix}
I & T^2 & I & T^3 & I & 0 & 0 & 0 & 0 & I & I & T^2 & I & 0 & 0 & 0 & I & T^{14} \\
0 & 0 & 0 & 0 & 0 & 0 & 0 & 0 & I & I & T^3 & I & 0 & 0 & 0 & 0 & 0 & 0 \\
0 & 0 & 0 & 0 & 0 & I & T^2 & I & I & 0 & 0 & 0 & T^{14} & T^3 & T & I & I \\
I & I & T^2 & I & T & I & I & T^2 & 0 & 0 & 0 & 0 & T^{14} & I & I & I & 0 & 0 \\
I & T^3 & I & I & I & 0 & 0 & 0 & 0 & 0 & 0 & 0 & 0 & I & 0 & 0 & 0 \\
0 & 0 & 0 & T^{14} & T & I & T^{14} & I & T^2 & T & I & T^2 & T^{14} & I & 0 & I & 0 & 0 \\
T^{14} & I & T^2 & 0 & 0 & 0 & 0 & 0 & 0 & 0 & T^2 & I & I & T^{14} & 0 & 0 & I & 0 \\
0 & 0 & 0 & 0 & 0 & I & I & T^2 & I & I & 0 & 0 & 0 & 0 & 0 & 0 & 0 & I
\end{bmatrix}
$$

**6.** Dispositif de correction d'erreur (115) selon l'une quelconque des revendications 2 à 5, dans lequel les moyens de génération du mot de vérification (KWi) et les moyens de génération dudit encore un mot de vérification supplémentaire (KWc) comprennent un seul réseau combinatoire (405) et des moyens (425) pour fournir sélectivement le mot de données (DWi) ou le mot de données supplémentaire (DWr) au réseau combinatoire.

**7.** Dispositif de correction d'erreur (115) selon l'une quelconque des revendications 2 à 5, dans lequel les moyens (405) de génération du mot de vérification (KWi) comprennent un premier réseau combinatoire (405) et les moyens (410) de génération dudit encore un mot de vérification supplémentaire (KWc) comprennent un deuxième réseau combinatoire (410) distinct du premier réseau combinatoire.

**8.** Dispositif mémoire (100), comprenant :

une matrice mémoire (105) de cellules mémoires ;

le dispositif de correction d'erreur (115) selon l'une quelconque des revendications 2 à 7 pour recevoir le mot de données (DWi) de l'extérieur du dispositif mémoire et pour fournir le mot de données supplémentaire (DWr) à l'extérieur du dispositif mémoire ; et

un circuit de lecture/écriture (110) comprenant des moyens de réception du mot de code (CWi) à partir du dispositif de correction d'erreur, et de mémorisation dudit mot de code sur la matrice mémoire et des moyens de lecture du mot de code supplémentaire (CWr) à partir de la matrice mémoire et de fourniture du mot de code supplémentaire au dispositif de correction d'erreur.

9. Dispositif mémoire (100) selon la revendication 8, dans lequel le dispositif mémoire est un dispositif de mémoire non-volatile à niveaux multiples, chaque cellule mémoire mémorisant un symbole.

10. Procédé de correction d'erreur comprenant l'étape suivante :

générer un mot de vérification de 16 bits à partir d'un mot de données de 128 bits selon une matrice de parité de 16x144 bits, le mot de vérification étant capable de fournir des informations concernant l'exactitude du mot de données ;
**caractérisé en ce que**
la matrice de parité a la structure définie dans l'une quelconque des revendications 1 à 7.

## FIG.1

$$T^{\infty} = \begin{bmatrix} 0 & 0 & 0 & 0 \\ 0 & 0 & 0 & 0 \\ 0 & 0 & 0 & 0 \\ 0 & 0 & 0 & 0 \end{bmatrix} = 0 \quad T^{0} = \begin{bmatrix} 1 & 0 & 0 & 0 \\ 0 & 1 & 0 & 0 \\ 0 & 0 & 1 & 0 \\ 0 & 0 & 0 & 1 \end{bmatrix} = I \quad T^{1} = \begin{bmatrix} 0 & 0 & 0 & 1 \\ 1 & 0 & 0 & 1 \\ 0 & 1 & 0 & 0 \\ 0 & 0 & 1 & 0 \end{bmatrix}$$

$$T^{2} = \begin{bmatrix} 0 & 0 & 1 & 0 \\ 0 & 0 & 1 & 1 \\ 1 & 0 & 0 & 1 \\ 0 & 1 & 0 & 0 \end{bmatrix} \quad T^{3} = \begin{bmatrix} 0 & 1 & 0 & 0 \\ 0 & 1 & 1 & 0 \\ 0 & 0 & 1 & 1 \\ 1 & 0 & 0 & 1 \end{bmatrix} \quad T^{4} = \begin{bmatrix} 1 & 0 & 0 & 1 \\ 1 & 1 & 0 & 1 \\ 0 & 1 & 1 & 0 \\ 0 & 0 & 1 & 1 \end{bmatrix}$$

$$T^{5} = \begin{bmatrix} 0 & 0 & 1 & 1 \\ 1 & 0 & 1 & 0 \\ 1 & 1 & 0 & 1 \\ 0 & 1 & 1 & 0 \end{bmatrix} \quad T^{6} = \begin{bmatrix} 0 & 0 & 1 & 1 \\ 0 & 1 & 0 & 1 \\ 1 & 0 & 1 & 0 \\ 1 & 1 & 0 & 1 \end{bmatrix} \quad T^{7} = \begin{bmatrix} 1 & 1 & 0 & 1 \\ 1 & 0 & 1 & 1 \\ 0 & 1 & 0 & 1 \\ 1 & 0 & 1 & 0 \end{bmatrix}$$

$$T^{8} = \begin{bmatrix} 1 & 0 & 1 & 0 \\ 0 & 1 & 1 & 1 \\ 1 & 0 & 1 & 1 \\ 0 & 1 & 0 & 1 \end{bmatrix} \quad T^{9} = \begin{bmatrix} 0 & 1 & 0 & 1 \\ 1 & 1 & 1 & 1 \\ 0 & 1 & 1 & 1 \\ 1 & 0 & 1 & 1 \end{bmatrix} \quad T^{10} = \begin{bmatrix} 1 & 0 & 1 & 1 \\ 1 & 1 & 1 & 0 \\ 1 & 1 & 1 & 1 \\ 0 & 1 & 1 & 1 \end{bmatrix}$$

$$T^{11} = \begin{bmatrix} 0 & 1 & 1 & 1 \\ 1 & 1 & 0 & 0 \\ 1 & 1 & 1 & 0 \\ 1 & 1 & 1 & 1 \end{bmatrix} \quad T^{12} = \begin{bmatrix} 1 & 1 & 1 & 1 \\ 1 & 0 & 0 & 0 \\ 1 & 1 & 0 & 0 \\ 1 & 1 & 1 & 0 \end{bmatrix} \quad T^{13} = \begin{bmatrix} 1 & 1 & 1 & 0 \\ 0 & 0 & 0 & 1 \\ 1 & 0 & 0 & 0 \\ 1 & 1 & 0 & 0 \end{bmatrix}$$

$$T^{14} = \begin{bmatrix} 1 & 1 & 0 & 0 \\ 0 & 0 & 1 & 0 \\ 0 & 0 & 0 & 1 \\ 1 & 0 & 0 & 0 \end{bmatrix}$$

## FIG.2

$$H = \begin{bmatrix} I & T^2 & I & T^3 & I & 0 & 0 & 0 & 0 & I & I & T^2 & I & 0 & 0 & 0 & I & T^{14} \\ 0 & 0 & 0 & 0 & 0 & 0 & 0 & 0 & I & I & T^2 & I & 0 & 0 & 0 & 0 & 0 \\ 0 & 0 & 0 & 0 & 0 & I & T^2 & I & I & 0 & 0 & 0 & 0 & T^{14} & T^3 & T & I & I \\ I & I & T^2 & I & T & I & I & T^2 & 0 & 0 & 0 & 0 & T^{14} & I & I & I & 0 & 0 \\ I & T^2 & I & I & I & 0 & 0 & 0 & 0 & 0 & 0 & 0 & 0 & 0 & I & 0 & 0 & 0 \\ 0 & 0 & 0 & T^{14} & T & I & T^{14} & I & T^2 & T & I & T^2 & T^{14} & I & 0 & I & 0 & 0 \\ T^{14} & I & T^2 & 0 & 0 & 0 & 0 & 0 & 0 & 0 & T^2 & I & I & T^{14} & 0 & 0 & I & 0 \\ 0 & 0 & 0 & 0 & 0 & I & I & T^2 & I & I & 0 & 0 & 0 & 0 & 0 & 0 & 0 & I \end{bmatrix}$$

# FIG.3a

FIG.3b

H

Memory matrix — 105

R/W circuitry — 110

Check 405
DWi
CWi
KWi 4
36
Check 410
DWr 32
CWr 36
KWr 4
KWc 4
415
S 4
Corrector 420
DWi 32
DWo 32
115

FIG.4a

Memory matrix — 105

R/W circuitry — 110

CWi 36
KWi 4
Check 405
r/w
425 32
DWi 32
DWr 32
DWo 32
DWi 32
CWr 36
KWc 4
KWr 4
415
S 4
Corrector 420
115

FIG.4b

FIG.5

## FIG.6

**EP 1 724 686 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219817 B

- US 5537427 A